# EUROPEAN PATENT APPLICATION

(11) **EP 4 606 648 A1**
(43) Date of publication of application: **27.08.2025**
(21) Application number: 23881913.0
(22) Date of filing: 26.10.2023
(51) Int. Cl.: B60Q 5/00, B60Q 9/00, H04S 7/00, B60W 50/14

(54) **CONTROL METHOD AND APPARATUS, AND DELIVERY VEHICLE**

(30) Priority: 28.10.2022 CN 202211337615
(71) Applicant: Shenzhen Yinwang Intelligent Technologies Co., Ltd., Shenzhen, Guangdong 518129 (CN)
(72) Inventor: ZHAO, Yang, Shenzhen, Guangdong 518129 (CN); DENG, Jiayu, Shenzhen, Guangdong 518129 (CN); MA, Rui, Shenzhen, Guangdong 518129 (CN)
(74) Representative: Körber, Martin Hans
(86) International application number: PCT/CN2023/126760
(87) International publication number: WO 2024/088337

(57) **Abstract**

A control method and apparatus and a delivery means are provided. The method includes: obtaining sensing information; and controlling, based on the sensing information, at least two sound-making apparatuses in different positions in the delivery means to make a sound image shift prompt tone, where the prompt tone indicates a status change of the delivery means. The control method may be applied to an intelligent vehicle or an electric vehicle. A user may intuitively determine a human-machine interaction result and a status change of a delivery means based on a sound image shift prompt tone. This helps improve human-machine interaction experience of the user.

## Description

This application claims priority to Chinese Patent Application No. 202211337615.4, filed with the China National Intellectual Property Administration on October 28, 2022 and entitled "CONTROL METHOD AND APPARATUS AND DELIVERY MEANS", which is incorporated herein by reference in its entirety.

### TECHNICAL FIELD

Embodiments of this application relate to the field of human-machine interaction, and more specifically, to a control method and apparatus and a delivery means.

### BACKGROUND

Currently, after performing some operations in a vehicle, a driver still needs to confirm, through image or text information on a dashboard display or a central display, that an interaction result between the person and the vehicle is valid. For example, after switching a gear of the vehicle from a parking gear (P gear) to a drive gear (D gear), the driver further needs to confirm, through text information "D" displayed on the dashboard display, that the vehicle is switched to the D gear. This increases cognitive load of the driver on the human-machine interaction result, and affects human-machine interaction experience of the user.

### SUMMARY

Embodiments of this application provide a control method and apparatus and a delivery means. This helps reduce cognitive load of a user on a human-machine interaction result, and further helps improve human-machine interaction experience of the user.

The delivery means in this application may include a vehicle on a road, a vehicle on water, an air vehicle, an industrial device, an agricultural device, an entertainment device, or the like. For example, the delivery means may be a vehicle in a broad sense, and may be a vehicle (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreation device, a toy vehicle, and the like. A type of the vehicle is not limited in embodiments of this application. For another example, the delivery means may be a vehicle like an airplane or a ship.

According to a first aspect, a control method is provided, where the method includes: obtaining sensing information; and controlling, based on the sensing information, at least two sound-making apparatuses in different positions in the delivery means to make a sound image (sound image, or soundstage) shift prompt tone, where the prompt tone indicates a status change of the delivery means.

In embodiments of this application, based on the obtained sensing information, the delivery means may notify a user of the status change of the delivery means based on the sound image shift prompt tone. In this way, the user can intuitively know a human-machine interaction result and the status change of the delivery means based on the sound image shift prompt tone. This helps reduce cognitive load of the user on the human-machine interaction result, and helps improve human-machine interaction experience of the user.

A sound image may be used to represent one or more of a depth, a height, and a width of a sound made by the sound-making apparatus. For example, a sound image shift (sound image shift) may be a change or movement of a sound image position of a sound in a specific direction within a specific time interval. In this way, the sound image shift prompt tone may bring the user an experience of a spatial position change of a sound.

In embodiments of this application, when the user performs human-machine interaction input, the delivery means may obtain corresponding sensing information, and the delivery means may further feed back, to the user, a prompt tone of a spatial position change. In this way, the user knows that a status of the delivery means is changing or the delivery means responds to the human-machine interaction input of the user. This helps enhance the human-machine interaction experience of the user, and also helps improve a degree of intelligence and a sense of technology of the delivery means.

In some possible implementations, the obtaining sensing information includes: obtaining sensing information collected by a sensor.

In some possible implementations, the sensor includes a sensor corresponding to a physical button or an entity button, a touch sensor, a voice sensor, a vision sensor, or the like.

The controlling at least two sound-making apparatuses in different positions in the delivery means to make a sound image shift prompt tone may also be understood as controlling the at least two sound-making apparatuses in the different positions in the delivery means to make a prompt tone of which a sound image can shift.

With reference to the first aspect, in some implementations of the first aspect, the method further includes: controlling a sound image shift direction of the prompt tone based on the sensing information.

In embodiments of this application, the sound image shift direction of the prompt tone may be controlled based on the sensing information. In this way, the sound image shift direction of the prompt tone corresponds to the user input, so that the user can further know the human-machine interaction result and the status change of the delivery means. This helps improve the human-machine interaction experience of the user.

With reference to the first aspect, in some implementations of the first aspect, the sensing information indicates switching from a first gear to a second gear, and the controlling a sound image shift direction of the prompt tone based on the sensing information includes: controlling the sound image shift direction of the prompt tone to be a first direction, where the first direction points from the first gear to the second gear.

In embodiments of this application, when it is detected that the user performs an operation of switching from the first gear to the second gear, the sound image shift direction of the prompt tone may be controlled to be the first direction. In this way, the user does not need to use another device or apparatus to confirm a gear change of the delivery means. This helps reduce cognitive load of the user when the user performs a gear change operation, and further helps improve the human-machine interaction experience of the user when the user performs the gear change operation.

In some possible implementations, a gear of the delivery means is a rotary gear, the sensing information indicates a rotation direction of switching from the first gear to the second gear, and the controlling a sound image shift direction of the prompt tone based on the sensing information includes: controlling the sound image shift direction of the prompt tone to be the rotation direction.

In some possible implementations, a gear of the delivery means is a stalk gear, the sensing information indicates a first lever moving direction, and the controlling a sound image shift direction of the prompt tone based on the sensing information includes: controlling the sound image shift direction of the prompt tone to be the first lever moving direction.

With reference to the first aspect, in some implementations of the first aspect, the sensing information indicates that a first function is enabled or disabled, and the controlling a sound image shift direction of the prompt tone based on the sensing information includes: controlling the sound image shift direction of the prompt tone to be a second direction, where the second direction is a normal direction of a plane on which the delivery means is located.

In embodiments of this application, the sound image shift direction of the prompt tone is controlled to be the second direction, so that the user can know whether the first function is enabled or disabled. In this way, the user does not need to use another device or apparatus to determine whether the first function is enabled or disabled. This helps reduce cognitive load of the user on an interaction result of enabling or disabling the first function, and further helps improve the human-machine interaction experience of the user.

In some possible implementations, the controlling the sound image shift direction of the prompt tone to be a second direction includes: when the sensing information indicates that the first function is enabled, controlling the sound image shift direction of the prompt tone to be a positive direction in the second direction; or when the sensing information indicates that the first function is disabled, controlling the sound image shift direction of the prompt tone to be a negative direction in the second direction.

With reference to the first aspect, in some implementations of the first aspect, the sensing information indicates steering to a third direction; and the controlling a sound image shift direction of the prompt tone based on the sensing information includes: controlling the sound image shift direction of the prompt tone to be the third direction.

In embodiments of this application, the sound image shift direction of the prompt tone is controlled to be the third direction, so that the user can know that the delivery means responds to a steering operation performed by the user. In this way, the user does not need to confirm, through prompt information on a dashboard display, an interaction result of the delivery means to the steering operation. This helps reduce cognitive load of the user on the interaction result of the steering operation, and further helps improve the human-machine interaction experience of the user when controlling steering of the delivery means.

With reference to the first aspect, in some implementations of the first aspect, the method further includes: controlling a lighting direction of an atmosphere lamp, where the lighting direction of the atmosphere lamp corresponds to the sound image shift direction, and the delivery means includes the atmosphere lamp.

In embodiments of this application, the lighting direction of the atmosphere lamp is controlled to correspond to the sound image shift direction, so that the user can further know the human-machine interaction result and the status change of the delivery means. This helps improve the human-machine interaction experience of the user.

In some possible implementations, the sensing information indicates that a mobile terminal is successfully charged or fails to be charged in a wireless charging area of the delivery means, and the controlling a sound image shift direction of the prompt tone based on the sensing information includes: controlling the sound image shift direction of the prompt tone to be the second direction.

In some possible implementations, the controlling a sound image shift direction of the prompt tone based on the sensing information includes: when the sensing information indicates that the mobile terminal is successfully charged in the wireless charging area of the delivery means, controlling the sound image shift direction of the prompt tone to be the positive direction in the second direction; or when the sensing information indicates that the mobile terminal fails to be charged in the wireless charging area of the delivery means, controlling the sound image shift direction of the prompt tone to be the negative direction in the second direction.

In some possible implementations, the sensing information indicates that a wireless connection between the mobile terminal and the delivery means succeeds or fails, and the controlling a sound image shift direction of the prompt tone based on the sensing information includes: controlling the sound image shift direction of the prompt tone to be the second direction.

For example, the wireless connection between the mobile terminal and the delivery means includes a Bluetooth connection.

With reference to the first aspect, in some implementations of the first aspect, the method further includes: controlling a sound image shift speed of the prompt tone based on the sensing information.

In embodiments of this application, the sound image shift speed of the prompt tone may be controlled based on the sensing information. In this way, a user input speed indicated by the sensing information is simulated by using the sound image shift speed of the prompt tone. This helps further improve the human-machine interaction experience of the user.

With reference to the first aspect, in some implementations of the first aspect, the sensing information indicates an opening change of an accelerator pedal or a brake pedal, and the controlling a sound image shift speed of the prompt tone based on the sensing information includes: controlling the sound image shift speed of the prompt tone based on the opening change of the accelerator pedal or the brake pedal.

In embodiments of this application, the sound image shift speed of the prompt tone is controlled with the opening change of the accelerator pedal or the brake pedal. In this way, different acceleration states of the delivery means are simulated by using different sound image shift speeds. This helps improve the human-machine interaction experience of the user when the user controls acceleration or deceleration of the vehicle.

With reference to the first aspect, in some implementations of the first aspect, the sensing information indicates a sliding input of the user on a display, and the controlling a sound image shift speed of the prompt tone based on the sensing information includes: controlling the sound image shift speed of the prompt tone based on a speed of the sliding input.

In embodiments of this application, the sound image shift speed of the prompt tone is controlled based on the speed of the sliding input of the user on the display. In this way, the speed of the sliding input of the user on the display may correspond to the sound image shift speed. This helps improve the human-machine interaction experience when the user performs the sliding input on the display.

With reference to the first aspect, in some implementations of the first aspect, the method further includes: determining the at least two sound-making apparatuses based on an area in which the user is located.

In embodiments of this application, the at least two sound-making apparatuses may be determined based on the area in which the user is located. In this way, the at least two sound-making apparatuses in the different positions in the area in which the user is located can be controlled to make the sound image shift prompt tone, and the user can further know the human-machine interaction result and the status change of the delivery means in the area in which the user is located. This helps improve the human-machine interaction experience of the user.

With reference to the first aspect, in some implementations of the first aspect, the delivery means includes a mapping relationship between a user input and a sound-making apparatus, and the method further includes: determining the at least two sound-making apparatuses based on the mapping relationship and the sensing information.

In embodiments of this application, the at least two sound-making apparatuses may be determined based on the mapping relationship between a user input and a sound-making apparatus and the sensing information. In this way, calculation overheads for determining the at least two sound-making apparatuses can be reduced. This helps reduce power consumption of the delivery means.

An embodiment of this application further provides a control method. The control method includes: When input of a user for a delivery means is detected, at least two sound-making apparatuses in different positions in the delivery means are controlled to make a sound image shift prompt tone, where the prompt tone indicates the delivery means to perform an operation corresponding to the input.

According to a second aspect, a control method is provided, where the method includes: obtaining sensing information; and controlling, based on the sensing information, at least two sound-making apparatuses in different positions in a delivery means to make a sound image shift prompt tone, where the prompt tone indicates a status change of an environment in which the delivery means is located, the prompt tone indicates a relative position of a to-be-prompted object, the prompt tone indicates a biometric feature recognition result of a user, the prompt tone indicates a connection status of the delivery means and a mobile terminal, or the prompt tone indicates that the mobile terminal is wirelessly charged successfully or fails to be wirelessly charged by the delivery means.

With reference to the second aspect, in some implementations of the second aspect, the sensing information indicates that a traffic indicator in an environment in which the delivery means is located changes, and the prompt tone indicates that the traffic indicator changes, or the prompt tone indicates the user to drive a vehicle through an intersection.

In some possible implementations, for example, the delivery means is a vehicle. When a traffic indicator at an intersection at which the vehicle is located indicates that a vehicle in a specific lane can pass through the intersection, the method further includes: controlling a sound image shift direction of the prompt tone to be a forward direction of the vehicle.

In some possible implementations, the controlling at least two sound-making apparatuses in different positions in a delivery means to make a sound image shift prompt tone includes: when no vehicle is detected to move forward within preset duration after the traffic indicator indicates that a vehicle in a lane can pass through the intersection, controlling the at least two sound-making apparatuses in the different positions of the delivery means to make the sound image shift prompt tone.

In embodiments of this application, when the traffic indicator indicates that passing is allowed, if attention of the user is not on the traffic indicator, the user may be notified, based on the sound image shift prompt tone, to quickly pass through the intersection. This helps avoid a traffic jam caused by excessively long waiting time, and also helps reduce passing time of the user.

With reference to the second aspect, in some implementations of the second aspect, for example, the delivery means is a vehicle. The sensing information indicates that the vehicle is currently on a congested road section and another vehicle in front of the vehicle moves forward, and the prompt tone indicates that the another vehicle moves forward.

In some possible implementations, the method further includes: controlling a sound image shift direction of the prompt tone to be a forward direction of the vehicle.

In some possible implementations, the controlling at least two sound-making apparatuses in different positions in a delivery means to make a sound image shift prompt tone includes: when it is detected that the another vehicle moves forward and a distance between the vehicle and the another vehicle is greater than or equal to a preset distance, controlling the at least two sound-making apparatuses in the different positions in the delivery means to make the sound image shift prompt tone.

In embodiments of this application, when the vehicle is in the congested road section and a vehicle ahead moves, if attention of the user is not on the traffic indicator, the user may be notified, based on the sound image shift prompt tone, to follow the vehicle ahead. This helps avoid a traffic jam on the congested road section.

With reference to the second aspect, in some implementations of the second aspect, the sensing information indicates that a user in a specific area of the delivery means does not wear a safety belt, and the method further includes: controlling a sound image shift direction of the prompt tone to point from an area in which the user is located to an area in which a driver is located, or point from an area in which the driver is located to an area in which the user is located.

In embodiments of this application, when a specific user in the delivery means does not wear the safety belt, the driver may be notified, based on the sound image shift prompt tone, of the area in which the user who does not wear the safety belt is located, to help the driver remind, in time, the user to wear the safety belt. This helps improve driving experience of the user.

According to a third aspect, a control apparatus is provided, where the control apparatus includes: an obtaining unit, configured to obtain sensing information; and a control unit, configured to control, based on the sensing information, at least two sound-making apparatuses in different positions in a delivery means to make a sound image shift prompt tone, where the prompt tone indicates a status change of the delivery means.

With reference to the third aspect, in some implementations of the third aspect, the control unit is configured to: control a sound image shift direction of the prompt tone based on the sensing information.

With reference to the third aspect, in some implementations of the third aspect, the sensing information indicates switching from a first gear to a second gear, and the control unit is configured to: control the sound image shift direction of the prompt tone to be a first direction, where the first direction points from the first gear to the second gear.

With reference to the third aspect, in some implementations of the third aspect, the sensing information indicates that a first function is enabled or disabled, and the control unit is configured to: control the sound image shift direction of the prompt tone to be a second direction, where the second direction is a normal direction of a plane on which the delivery means is located.

With reference to the third aspect, in some implementations of the third aspect, the sensing information indicates steering to a third direction, and the control unit is configured to: control the sound image shift direction of the prompt tone to be the third direction.

With reference to the third aspect, in some implementations of the third aspect, the control unit is further configured to: control a lighting direction of an atmosphere lamp, where the lighting direction of the atmosphere lamp corresponds to the sound image shift direction, and the delivery means includes the atmosphere lamp.

With reference to the third aspect, in some implementations of the third aspect, the control unit is configured to: control a sound image shift speed of the prompt tone based on the sensing information.

With reference to the third aspect, in some implementations of the third aspect, the sensing information indicates an opening change of an accelerator pedal or a brake pedal, and the control unit is configured to: control the sound image shift speed of the prompt tone based on the opening change of the accelerator pedal or the brake pedal.

With reference to the third aspect, in some implementations of the third aspect, the sensing information indicates a sliding input of the user on a display, and the control unit is configured to: control the sound image shift speed of the prompt tone based on a speed of the sliding input.

With reference to the third aspect, in some implementations of the third aspect, the apparatus further includes: a first determining unit, configured to determine the at least two sound-making apparatuses based on an area in which the user is located.

With reference to the third aspect, in some implementations of the third aspect, the delivery means includes a mapping relationship between a user input and a sound-making apparatus, and the apparatus further includes: a second determining unit, configured to determine the at least two sound-making apparatuses based on the mapping relationship and the sensing information.

According to a fourth aspect, a control apparatus is provided, where the control apparatus includes: an obtaining unit, configured to obtain sensing information; and a control unit, configured to control, based on the sensing information, at least two sound-making apparatuses in different positions in a delivery means to make a sound image shift prompt tone, where the prompt tone indicates a status change of an environment in which the delivery means is located, the prompt tone indicates a relative position of a to-be-prompted object, or the prompt tone indicates a biometric feature recognition result of a user.

According to a fifth aspect, a control apparatus is provided. The control apparatus includes a processing unit and a storage unit, the storage unit is configured to store instructions, and the processing unit executes the instructions stored in the storage unit, so that the control apparatus performs the method in any possible method in the first aspect or the second aspect.

According to a sixth aspect, a control system is provided. The system includes at least two sound-making apparatuses and a computing platform, where the computing platform includes any possible apparatus in the third aspect or the fourth aspect, or the computing platform includes the apparatus in the fifth aspect.

In some possible implementations, the control system further includes one or more sensors.

According to a seventh aspect, a delivery means is provided. The delivery means includes any possible apparatus in the third aspect, or includes the apparatus in the fourth aspect, or includes the apparatus in the fifth aspect, or includes the control system in the sixth aspect.

In some possible implementations, the delivery means is a vehicle.

According to an eighth aspect, a computer program product is provided, where the computer program product includes computer program code, and when the computer program code is run on a computer, the computer performs the method according to any possible method in the first aspect or the second aspect.

It should be noted that all or some of the computer program code may be stored in a first storage medium. The first storage medium may be encapsulated together with a processor, or may be encapsulated separately from a processor. This is not specifically limited in embodiments of this application.

According to a ninth aspect, a computer-readable medium is provided. The computer-readable medium stores program code. When the computer program code is run on a computer, the computer is enabled to perform any possible method in the first aspect or the second aspect.

According to a tenth aspect, an embodiment of this application provides a chip system. The chip system includes a processor, configured to invoke a computer program or computer instructions stored in a memory, so that the processor performs any possible method in the first aspect or the second aspect.

With reference to the tenth aspect, in a possible implementation, the processor is coupled to a memory through an interface.

With reference to the tenth aspect, in a possible implementation, the chip system further includes a memory. The memory stores a computer program or computer instructions.

**In** embodiments of this application, based on obtained sensing information, a user may be notified of a status change of a delivery means based on a sound image shift prompt tone. In this way, the user can intuitively know a human-machine interaction result and the status change of the delivery means based on the sound image shift prompt tone, and the user does not need to know the human-machine interaction result by using another device or apparatus. This helps reduce cognitive load of the user on the human-machine interaction result, and further helps improve human-machine interaction experience of the user.

A sound image shift direction of the prompt tone is controlled based on the sensing information, so that the sound image shift direction of the prompt tone corresponds to a user input. In this way, the user can further know the human-machine interaction result and the status change of the delivery means. This helps improve the human-machine interaction experience of the user.

A sound image shift speed of the prompt tone is controlled based on the sensing information, so that the user input speed indicated by the sensing information is simulated by using the sound image shift speed of the prompt tone. This helps further improve the human-machine interaction experience of the user.

At least two sound-making apparatuses may be determined based on an area in which the user is located. In this way, the at least two sound-making apparatuses in the different positions in the area in which the user is located can be controlled to make the sound image shift prompt tone, and the user can further know the human-machine interaction result and the status change of the delivery means in the area in which the user is located. This helps improve the human-machine interaction experience of the user.

The at least two sound-making apparatuses are determined based on a mapping relationship between a user input and a sound-making apparatus and the sensing information. In this way, calculation overheads for determining the at least two sound-making apparatuses can be reduced. This helps reduce power consumption of the delivery means.

### BRIEF DESCRIPTION OF DRAWINGS

FIG. 1 is a functional block diagram of a delivery means according to an embodiment of this application;
FIG. 2(a) to FIG. 2(d) are a diagram of an application scenario according to an embodiment of this application;
FIG. 3(a) and FIG. 3(b) are a diagram of another application scenario according to an embodiment of this application;
FIG. 4 is a diagram of another application scenario according to an embodiment of this application;
FIG. 5 is a diagram of another application scenario according to an embodiment of this application;
FIG. 6(a) and FIG. 6(b) are a diagram of another application scenario according to an embodiment of this application;
FIG. 7 is a diagram of another application scenario according to an embodiment of this application;
FIG. 8 is a diagram of another application scenario according to an embodiment of this application;
FIG. 9 is a diagram of another application scenario according to an embodiment of this application;
FIG. 10 is a diagram of another application scenario according to an embodiment of this application;
FIG. 11 is a diagram of another application scenario according to an embodiment of this application;
FIG. 12 is a diagram of another application scenario according to an embodiment of this application;
FIG. 13 is a diagram of distribution of speakers in a vehicle according to an embodiment of this application;
FIG. 14 is a schematic flowchart of a control method according to an embodiment of this application;
FIG. 15 is a schematic flowchart of another control method according to an embodiment of this application;
FIG. 16 is a block diagram of a control apparatus according to an embodiment of this application; and
FIG. 17 is a block diagram of a control system according to an embodiment of this application.

### DESCRIPTION OF EMBODIMENTS

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists.

The prefix words "first", "second", and the like in embodiments of this application are merely intended to distinguish between different objects, and impose no limitation on locations, sequences, priorities, quantities, content, or the like of the described objects. In embodiments of this application, use of a prefix word, for example, an ordinal number, used to distinguish between described objects does not constitute a limitation on the described objects. For descriptions of the described objects, refer to the descriptions of the context in the claims or embodiments. The use of such a prefix word should not constitute a redundant limitation. In addition, in the descriptions of embodiments, unless otherwise specified, "a plurality of" means two or more.

As described above, after performing some operations in a vehicle, a driver still needs to confirm, through an image or text information on a dashboard display or a central display, that an interaction result between a person and the vehicle is valid. For example, after switching a gear of the vehicle from a P gear to a D gear, the driver further needs to confirm, through text information "D" displayed on the dashboard display, that the vehicle is switched to the D gear. This increases cognitive load of the driver on the human-machine interaction result, and affects human-machine interaction experience of a user.

Embodiments of this application provide a control method, a control apparatus, and a delivery means. Based on obtained sensing information, a user may be notified of a status change of a delivery means based on a sound image shift prompt tone. In this way, the user may intuitively know a human-machine interaction result and the status change of the delivery means. This helps improve human-machine interaction experience of the user.

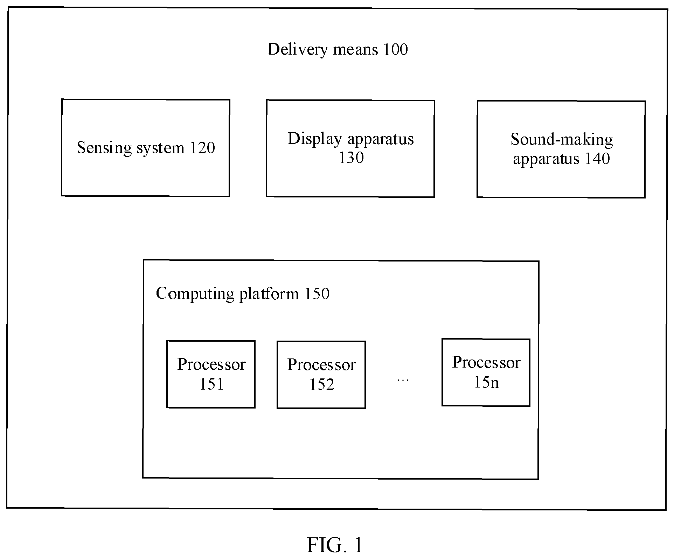

FIG. 1 is a functional block diagram of a delivery means 100 according to an embodiment of this application. The delivery means 100 may include a sensing system 120, a display apparatus 130, and a sound-making apparatus 140, and a computing platform 150. The sensing system 120 may include one or more sensors that sense information about an environment around the delivery means 100. For example, the sensing system 120 may include a positioning system. The positioning system may be a global positioning system (global positioning system, GPS), a BeiDou system, or another positioning system. The sensing system 120 may also include one or more of an inertial measurement unit (inertial measurement unit, IMU), a lidar, a millimeter-wave radar, an ultrasonic radar, and a camera apparatus.

Some or all functions of the delivery means 100 may be controlled by the computing platform 150. The computing platform 150 may include one or more processors, for example, processors 151 to 15n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In a reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions, and some or all of the processors 151 to 15n may invoke the instructions in the memory and execute the instructions, to implement corresponding functions.

The display apparatus 130 in a cockpit is mainly classified into two types: a first type is a vehicle-mounted display, and a second type is a projection display, for example, a head-up display apparatus (head-up display, HUD). The vehicle-mounted display is a physical display, and is an important part of an in-vehicle infotainment system. A plurality of displays may be disposed in the cockpit, for example, a digital dashboard display, a central display, a display in front of a passenger (also referred to as a front-seat passenger) in a front passenger seat, a display in front of a rear-seat passenger on the left, and a display in front of a rear-seat passenger on the right. Even a window may be used as a display for display. The head-up display, also referred to as a head-up display system, is mainly configured to display driving information such as a speed and navigation on a display device (for example, a windshield) in front of a driver, to reduce sight line diversion time of the driver, avoid a pupil change caused by sight line diversion of the driver, and improve traveling safety and comfort. For example, the HUD includes a combiner head-up display (combiner-HUD, C-HUD) system, a windshield head-up display (windshield-HUD, W-HUD) system, and an augmented reality head-up display (augmented reality HUD, AR-HUD) system. It should be understood that the HUD may alternatively have another type of system with technology evolution. This is not limited in this application.

The sound-making apparatus 140 may be a speaker, a sound box, a horn, or the like.

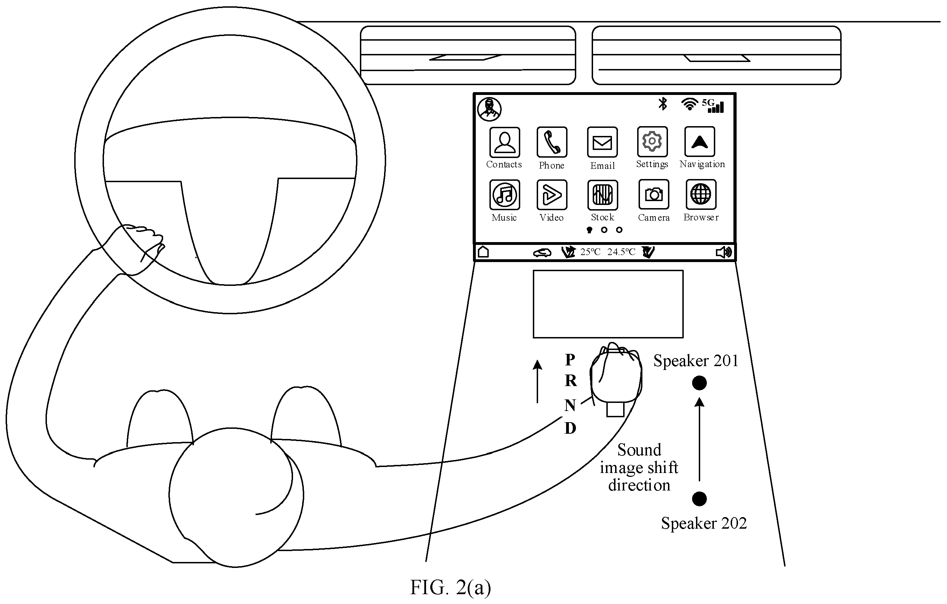

FIG. 2(a) to FIG. 2(d) are a diagram of an application scenario according to an embodiment of this application.

As shown in FIG. 2(a), a vehicle may control a speaker 201 and a speaker 202 to make a sound image shift prompt tone when it is determined, based on sensing information collected by a gear sensor, that a user performs an operation of switching from a D gear to a P gear, where the prompt tone indicates that a gear status of the vehicle changes.

For example, a computing platform 150 may obtain gear information collected by the gear sensor, where the gear information indicates switching from the D gear to the P gear. The computing platform 150 may control, based on the gear information, a gear of the vehicle to switch to the P gear, and control the speaker 201 and the speaker 202 to make the sound image shift prompt tone.

In an embodiment, that a vehicle may control a speaker 201 and a speaker 202 to make a sound image shift prompt tone when it is determined, based on sensing information collected by a gear sensor, that a user performs an operation of switching from a D gear to a P gear includes: When it is determined, based on the sensing information collected by the gear sensor, that the user performs the operation of switching from the D gear to the P gear, and a gear switching operation of the user is not detected within preset duration since the P gear is switched to, the vehicle may control the speaker 201 and the speaker 202 to make the sound image shift prompt tone.

For example, the preset duration is 0.5 seconds (second, s).

In an embodiment, the vehicle may further control a sound image shift direction of the prompt tone based on the sensing information. For example, the sound image shift direction of the prompt tone may be controlled to point from a position of the speaker 202 to a position of the speaker 201.

In an embodiment, that the vehicle may control the speaker 201 and the speaker 202 to make the sound image shift prompt tone includes: The vehicle controls play intensity of the speaker 201 and the speaker 202.

For example, at a moment T1, play intensity of a prompt tone made by the speaker 201 may be controlled to be 20 dB, and play intensity of a prompt tone made by the speaker 202 may be controlled to be 40 dB. At a moment T2 after the moment T1, play intensity of a prompt tone made by the speaker 201 may be controlled to be 40 dB, and play intensity of a prompt tone made by the speaker 202 may be controlled to be 20 dB. Therefore, the speaker 201 and the speaker 202 may be controlled to make the prompt tone whose sound image shift direction points from the position of the speaker 202 to the position of the speaker 201.

For example, a time interval between the moment T1 and the moment T2 may be 100 milliseconds (millisecond, ms).

In an embodiment, the moment T1 may be a moment at which the computing platform 150 obtains the sensing information from the gear sensor.

In an embodiment, that the vehicle may control the speaker 201 and the speaker 202 to make the sound image shift prompt tone includes: The vehicle controls a delay between the speaker 201 and the speaker 202.

For example, at a moment T1, play intensity of a prompt tone made by the speaker 202 may be controlled to be 20 dB and the speaker 201 may be controlled not to make a prompt tone; and at a moment T1+ΔT, play intensity of a prompt tone made by the speaker 201 may be controlled to be 20 dB and the speaker 202 may be controlled not to make a prompt tone. Therefore, the speaker 201 and the speaker 202 may be controlled to make the prompt tone whose sound image shift direction points from the position of the speaker 202 to the position of the speaker 201.

For example, ΔT may be 20 ms.

In an embodiment, that the vehicle may control the speaker 201 and the speaker 202 to make the sound image shift prompt tone includes: The vehicle controls a delay between the speaker 201 and the speaker 202 and play intensity of the speaker 201 and the speaker 20.

For example, at a moment T1, play intensity of a prompt tone made by the speaker 202 may be controlled to be 40 dB and the speaker 201 may be controlled not to make a prompt tone; and at a moment T1+ΔT, play intensity of a prompt tone made by the speaker 201 may be controlled to be 20 dB and the speaker 202 may be controlled not to make a prompt tone. At a moment T2 after the moment T1, play intensity of a prompt tone made by the speaker 202 is controlled to be 20 dB and the speaker 201 is controlled not to make a prompt tone; and at a moment T2+ΔT, the speaker 202 is controlled not to make a prompt tone and play intensity of a prompt tone made by the speaker 201 is controlled to be 40 dB. Therefore, the speaker 201 and the speaker 202 may be controlled to make the prompt tone whose sound image shift direction points from the position of the speaker 202 to the position of the speaker 201.

In the foregoing examples, the speaker 201 and the speaker 202 are used as examples for description. A quantity of sound-making apparatuses that make a sound image shift prompt tone is not limited in embodiments of this application. For example, a sound image shift prompt tone may alternatively be made by three or more speakers.

In an embodiment, when it is determined, based on the sensing information collected by the gear sensor, that the user performs an operation of switching from the D gear to a reversing gear (R gear), the speaker 201 and the speaker 202 may be controlled to make a sound image shift prompt tone. For example, a sound image shift direction of the prompt tone points from the position of the speaker 202 to the position of the speaker 201.

In an embodiment, when it is determined, based on the sensing information collected by the gear sensor, that the user performs an operation of switching from the D gear to a neutral gear (N gear), the speaker 201 and the speaker 202 may be controlled to make a sound image shift prompt tone. For example, a sound image shift direction of the prompt tone points from the position of the speaker 202 to the position of the speaker 201.

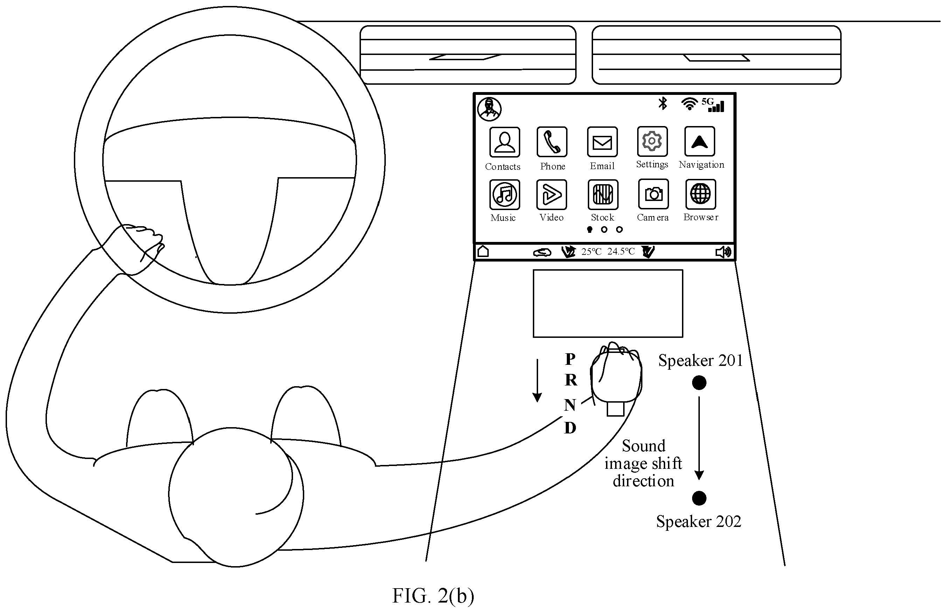

As shown in FIG. 2(b), the vehicle may control the speaker 201 and the speaker 202 to make a sound image shift prompt tone when it is determined, based on the sensing information collected by the gear sensor, that the user performs an operation of switching from the P gear to the D gear, where the prompt tone indicates that the gear status of the vehicle changes.

In an embodiment, the vehicle may further control a sound image shift direction of the prompt tone based on the sensing information. For example, the sound image shift direction of the prompt tone points from the position of the speaker 201 to the position of the speaker 202.

It should be understood that, for a process in which the speaker 201 and the speaker 202 are controlled to make the prompt tone whose sound image shift direction points from the position of the speaker 201 to the position of the speaker 202, refer to descriptions in the foregoing embodiments. Details are not described herein again.

FIG. 2(a) and FIG. 2(b) are described by using an example in which straight linear gears are used. Embodiments of this application are not limited thereto. For example, zigzag gears, rotary gears, or stalk gears may alternatively be used.

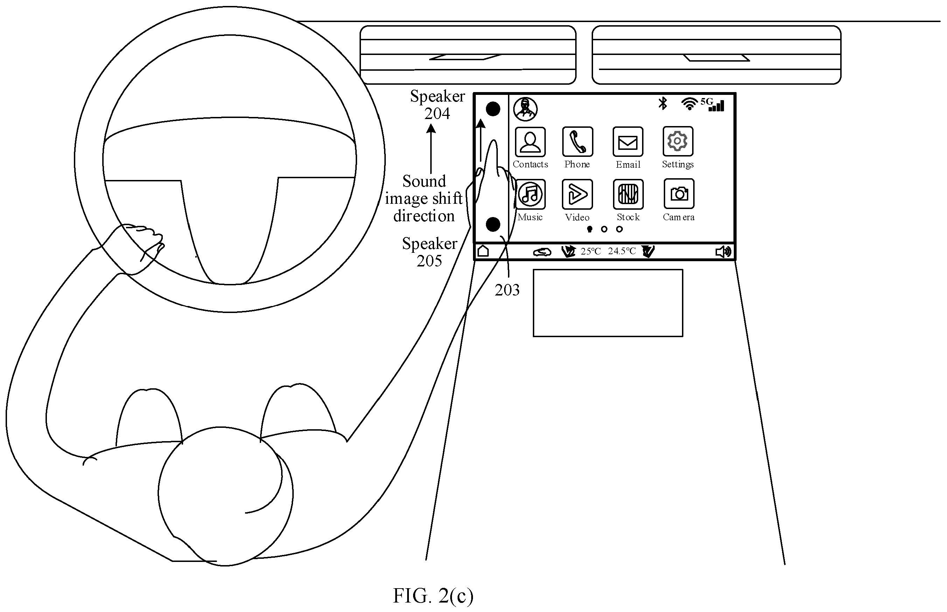

As shown in FIG. 2(c), a vehicle-mounted display includes a display area 203. When a bottom-top sliding input of the user in the display area 203 is determined based on touch data collected by a touch sensor on the vehicle-mounted display, the vehicle may control a speaker 204 and a speaker 205 to make a sound image shift prompt tone, where the prompt tone indicates that the gear status of the vehicle changes.

For example, the vehicle-mounted display includes the speaker 204 and the speaker 205. When the touch data collected by the touch sensor indicates a bottom-top sliding operation of a finger of the user in the display area 203, the vehicle may switch to the D gear and control the speaker 204 and the speaker 205 to make the sound image shift prompt tone, where the prompt tone indicates that the gear of the vehicle changes.

In an embodiment, when the touch data indicates the bottom-top sliding input of the finger of the user in the display area 203, a sound image shift direction of the prompt tone may be controlled to point from a position of the speaker 205 to a position of the speaker 204.

It should be understood that, for a process in which the speaker 204 and the speaker 205 are controlled to make the prompt tone whose sound image shift direction points from the position of the speaker 205 to the position of the speaker 204, refer to descriptions in the foregoing embodiments. Details are not described herein again.

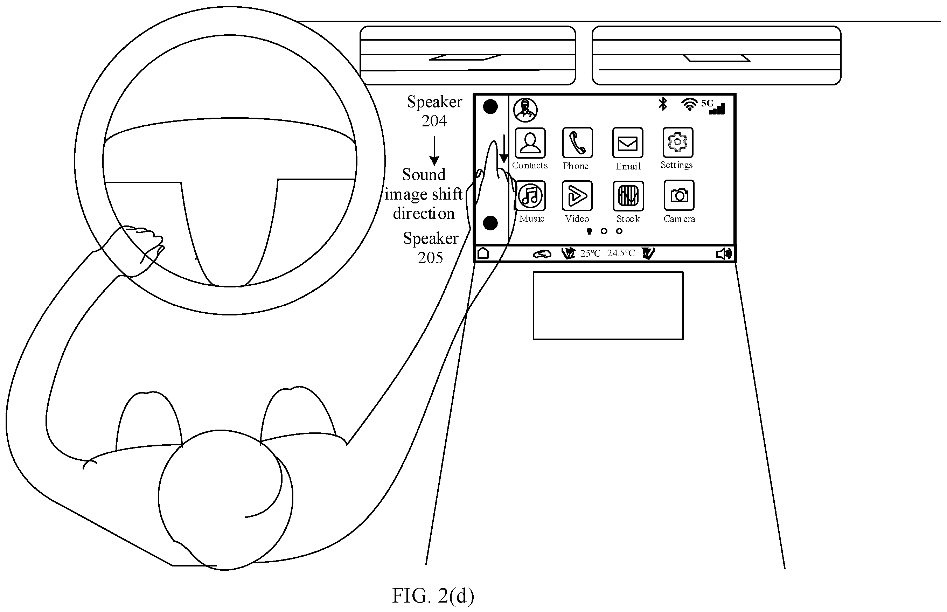

As shown in FIG. 2(d), when a top-bottom sliding input of the finger of the user in the display area 203 is determined based on touch data collected by the touch sensor on the vehicle-mounted display 203, the vehicle may control the speaker 204 and the speaker 205 to make a sound image shift prompt tone, where the prompt tone indicates that the gear status of the vehicle changes.

In an embodiment, when the touch data indicates the top-bottom sliding input in the display area 203, the sound image shift direction of the prompt tone may be controlled to point from the position of the speaker 204 to the position of the speaker 205.

FIG. 2(c) and FIG. 2(d) are described by using an example in which a gear shift operation is performed based on the sliding input on the vehicle-mounted display. Embodiments of this application are not limited thereto. For example, a gear shift operation may alternatively be performed in a manner of detecting a preset gesture. For example, when it is detected that the vehicle is currently in the P gear and it is determined, based on an image obtained by a camera in a cockpit of the vehicle, that a driver makes a first preset gesture (for example, a peace gesture or a gesture in which two fingers are raised), the gear may be controlled to switch from the P gear to the D gear and at least two sound-making apparatuses in the cockpit may be controlled to make a sound image shift prompt tone, where the prompt tone indicates that the gear of the vehicle changes.

For another example, when it is detected that the vehicle is currently in the P gear and duration in which it is determined, based on sensing information obtained by a brake pedal sensor, that an opening of a brake pedal is greater than or equal to a first opening threshold is greater than or equal to first preset duration, the gear may be controlled to switch from the P gear to the D gear and at least two sound-making apparatuses in the cockpit may be controlled to make a sound image shift prompt tone, where the prompt tone indicates that the gear of the vehicle changes.

For example, the first opening threshold is 50%.

For example, the first preset duration is 5 seconds (second, s).

For another example, when it is detected that the vehicle is currently in the P gear and it is determined, based on data collected by a sensor (for example, one or more of a camera, a lidar, or a millimeter-wave radar) outside the cockpit, that there is an obstacle at the tail of the vehicle, the gear may be controlled to switch from the P gear to the D gear and at least two sound-making apparatuses in the cockpit may be controlled to make a sound image shift prompt tone, where the prompt tone indicates that the gear of the vehicle changes.

For another example, when it is detected that the vehicle is currently in the P gear and it is determined, based on voice information collected by a voice sensor, that the user sends a voice instruction for switching to the D gear, the gear may be controlled to switch from the P gear to the D gear and at least two sound-making apparatuses in the cockpit may be controlled to make a sound image shift prompt tone, where the prompt tone indicates that the gear of the vehicle changes.

In an embodiment, at least two sound-making apparatuses may be controlled to periodically make a sound image shift prompt tone. The scenario shown in FIG. 2(a) is used as an example. The vehicle may control the speaker 201 and the speaker 202 to make the sound image shift prompt tone when it is determined, based on the sensing information collected by the gear sensor, that the user performs the operation of switching from the D gear to the P gear, and a broadcast period of the prompt tone is 200 ms. The vehicle may control the speaker 201 and the speaker 202 to perform broadcasting for 1s (or 5 broadcast periods).

The position of the speaker 201, the position of the speaker 202, the position of the speaker 204, or the position of the speaker 205 may include one or more speakers. For example, when the position of the speaker 201 includes a plurality of speakers, the plurality of speakers may form a speaker group.

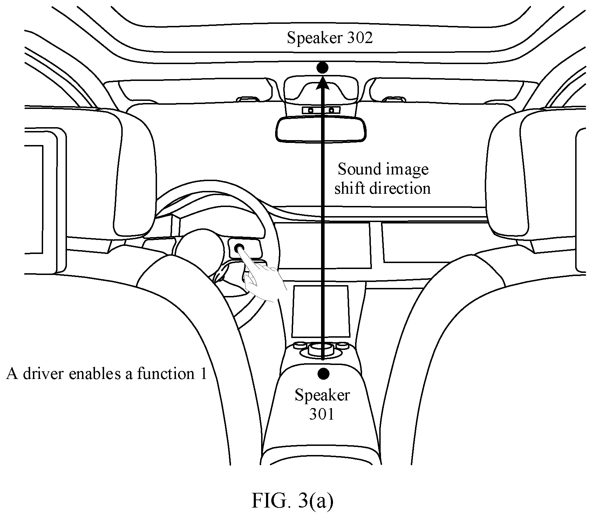

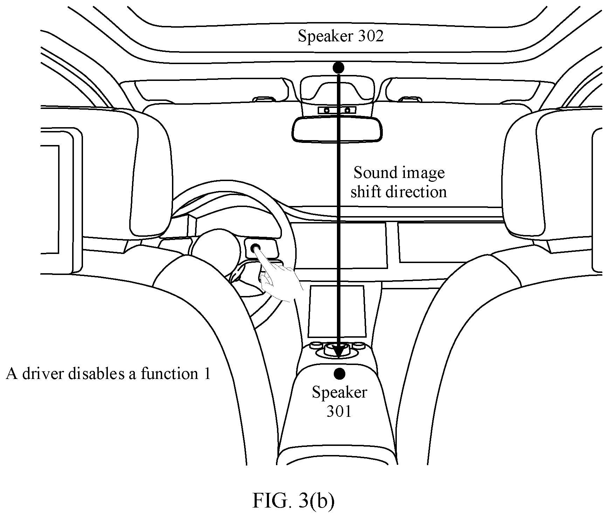

FIG. 3(a) and FIG. 3(b) are a diagram of another application scenario according to an embodiment of this application.

As shown in FIG. 3(a), when an operation of enabling a function 1 by a driver is determined based on sensing information collected by a physical button sensor on a steering wheel, at least two sound-making apparatuses in different positions may be controlled to make a sound image shift prompt tone, where the prompt tone indicates that the function 1 of the vehicle is enabled.

In an embodiment, a sound image shift direction of the prompt tone is a normal direction of a plane on which a vehicle is located. For example, the sound image shift direction of the prompt tone points from a position of a speaker 301 to a position of a speaker 302.

The foregoing is described by using an example in which when the function 1 is enabled, the sound image shift direction of the prompt tone is controlled to point from the position of the speaker 301 to the position of the speaker 302. Embodiments of this application are not limited thereto. For example, when the operation of enabling the function 1 by the driver is determined based on the sensing information collected by the physical button sensor on the steering wheel, the speaker 201 and the speaker 202 may be controlled to make the sound image shift prompt tone, to prompt the user that the function 1 of the vehicle is enabled.

As shown in FIG. 3(b), when an operation of disabling a function 1 by a driver is determined based on sensing information collected by the physical button sensor on the steering wheel, the at least two sound-making apparatuses in the different positions may be controlled to make a sound image shift prompt tone, where the prompt tone indicates that the function 1 of the vehicle is disabled.

In an embodiment, a sound image shift direction of the prompt tone is the normal direction of the plane on which the vehicle is located. For example, the sound image shift direction of the prompt tone points from the position of the speaker 302 to the position of the speaker 301.

It should be understood that, for a process in which the speaker 301 and the speaker 302 are controlled to make the prompt tone whose sound image shift direction is from the position of the speaker 301 to the position of the speaker 302, or to make the prompt tone whose sound image shift direction is from the position of the speaker 302 to the position of the speaker 301, refer to descriptions in the foregoing embodiments. Details are not described herein again.

In an embodiment, the function 1 includes but is not limited to enabling or disabling of a fully autonomous driving function, an advanced driver assistance system (advanced driver assistance system, ADAS) function, an intermediate driver assistance system function, a low driver assistance system function, a hybrid automatic voltage control (hybrid automatic voltage control, HAVC) function, an adaptive cruise control (adaptive cruise control, ACC) function, or the like.

The foregoing is described by using an example in which the driver taps the physical button on the steering wheel to enable or disable the function 1. Embodiments of this application are not limited thereto. For example, when it is determined, based on sensing information collected by the physical button sensor on another component, that the user enables or disables a specific function, the at least two sound-making apparatuses in the different positions may be controlled to make a sound image shift prompt tone. For example, after it is determined, based on sensing information collected by a physical button sensor on a vehicle door, that the user enables a child lock function on the vehicle, at least two sound-making apparatuses in different positions may be controlled to make a sound image shift prompt tone, where the prompt tone indicates that the child lock function is enabled.

For example, when it is determined, based on sensing information collected by a virtual button sensor (for example, a touch sensor) on a display, that the user enables or disables a function, at least two sound-making apparatuses in different positions may be controlled to make a sound image shift prompt tone. For example, a function corresponding to a virtual button on a vehicle-mounted display is a lane departure warning (lane departure warning, LDW) function. When it is determined, based on touch data collected by a touch sensor on the vehicle-mounted display, that the user enables the lane departure warning function, at least two sound-making apparatuses in different positions may be controlled to make a sound image shift prompt tone, where the prompt tone indicates that the LDW function of the vehicle is enabled.

The position of the speaker 301 or the position of the speaker 302 may include one or more speakers. For example, when the position of the speaker 301 includes a plurality of speakers, the plurality of speakers may form a speaker group.

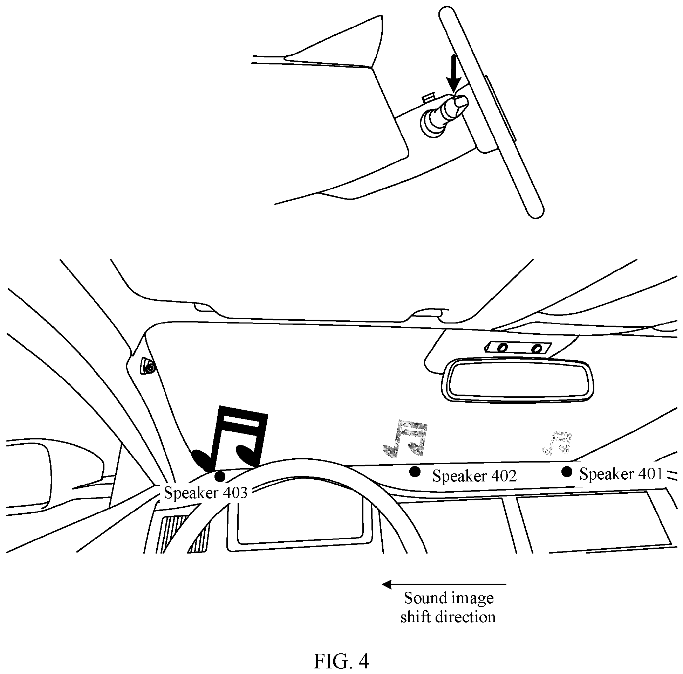

FIG. 4 is a diagram of another application scenario according to an embodiment of this application.

As shown in FIG. 4, when it is detected that a user moves a turn signal lever downward, a left indicator of a vehicle may be controlled to blink, and at least two sound-making apparatuses in different positions may be controlled to make a sound image shift prompt tone.

In an embodiment, it may be determined, based on sensing information collected by a turn signal lever sensor, that the user moves the turn signal lever downward.

In an embodiment, when an operation of moving the turn signal lever downward by the user is detected, a sound image shift direction of the prompt tone may be controlled to point from a front passenger position of the vehicle to a driver position of the vehicle. For example, the sound image shift direction points from a position of a speaker 401 to a position of a speaker 403.

The position of the speaker 401, a position of the speaker 402, or the position of the speaker 403 may include one or more speakers. For example, when the position of the speaker 401 includes a plurality of speakers, the plurality of speakers may form a speaker group. For example, the position of the speaker 401 includes three speakers, two of the three speakers are located on a front passenger door, and one speaker is located on an A pole on a front passenger side.

In an embodiment, when it is detected that a user moves the turn signal lever upward, a right indicator of a vehicle may be controlled to blink, and at least two sound-making apparatuses in different positions may be controlled to make a sound image shift prompt tone. For example, a sound image shift direction of the prompt tone may be controlled to point from the driver position of the vehicle to the front passenger position of the vehicle. For example, the sound image shift direction points from the position of the speaker 403 to the position of the speaker 401.

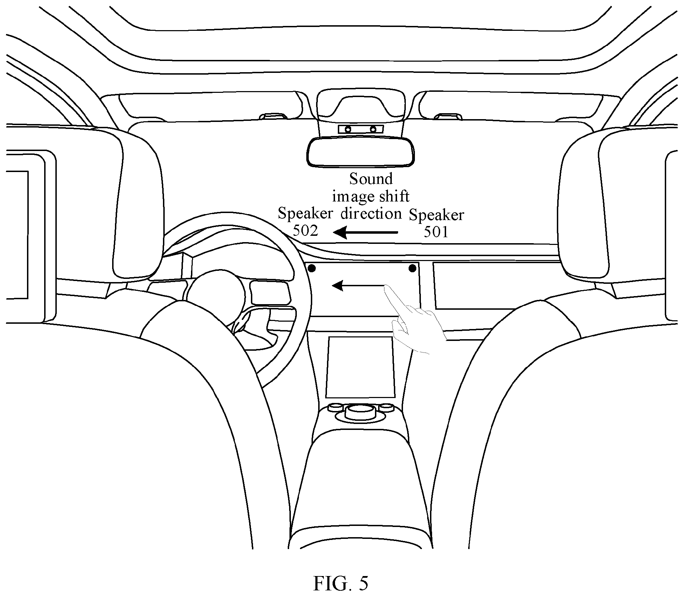

FIG. 5 is a diagram of another application scenario according to an embodiment of this application.

As shown in FIG. 5, when a sliding input of a user on a vehicle-mounted display is determined based on touch data collected by a touch sensor on the vehicle-mounted display, an operation corresponding to the sliding input may be performed and at least two sound-making apparatuses in different positions may be controlled to make a sound image shift prompt tone, where the prompt tone indicates that the vehicle performs the operation corresponding to the sliding input.

For example, the vehicle-mounted display displays a first tab (for example, the first tab includes icons of an application 1 to an application 8) of a plurality of tabs. When a right-left sliding input of the user on the vehicle-mounted display is detected, a second tab (for example, the second tab includes icons of an application 9 to an application 16) of the plurality of tabs may be displayed through switching, and a speaker 501 and a speaker 502 are controlled to make a prompt tone whose sound image shift direction is from the position of the speaker 501 to the position of the speaker 502.

In an embodiment, a sound image shift speed may be further controlled based on a speed of the sliding input.

For example, when it is determined, based on the touch data, that the speed of the sliding input is less than a preset speed threshold, the speaker 501 and the speaker 502 may be controlled to make a prompt tone with a low sound image shift speed. For example, at a moment T3, play intensity of a prompt tone made by the speaker 501 may be controlled to be 20 dB and the speaker 502 may be controlled not to make a prompt tone; and at a moment T3+2ΔT, play intensity of a prompt tone made by the speaker 502 may be controlled to be 20 dB and the speaker 501 may be controlled not to make a prompt tone.

For example, when it is determined, based on the touch data, that the speed of the sliding input is greater than or equal to a preset speed threshold, the speaker 501 and the speaker 502 may be controlled to make a prompt tone with a high sound image shift speed. For example, at the moment T3, play intensity of a prompt tone made by the speaker 501 may be controlled to be 20 dB and the speaker 502 may be controlled not to make a prompt tone; and at a moment T3+ΔT, play intensity of a prompt tone made by the speaker 502 may be controlled to be 20 dB and the speaker 501 may be controlled not to make a prompt tone.

For example, the moment T3 is a moment at which the touch data is collected by using the touch sensor.

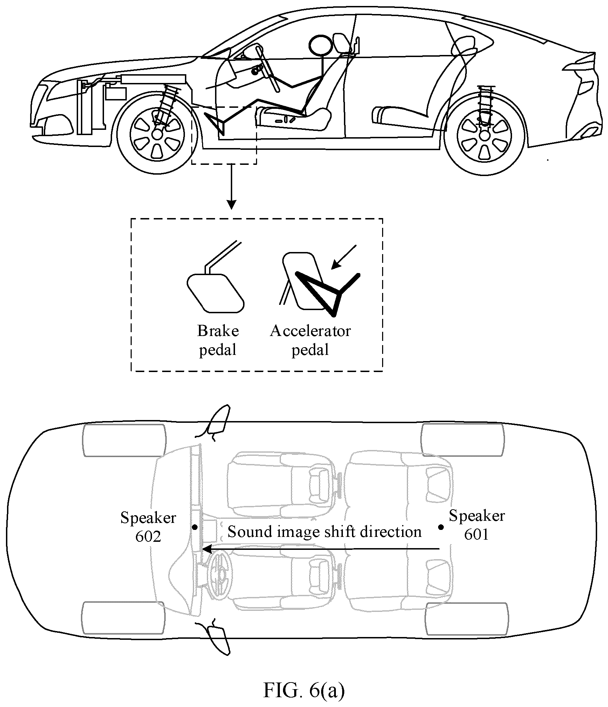

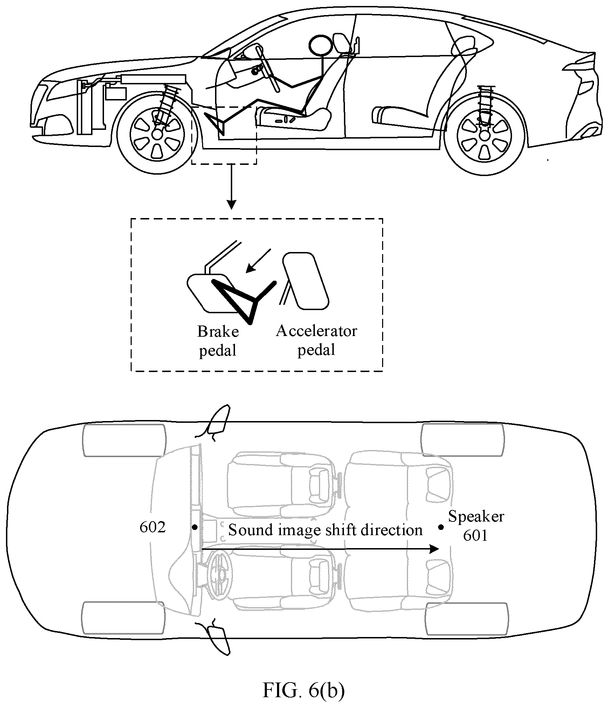

FIG. 6(a) and FIG. 6(b) are a diagram of another application scenario according to an embodiment of this application.

As shown in FIG. 6(a), when an opening change of an accelerator pedal is determined based on sensing information collected by an accelerator pedal sensor, a speaker 601 and a speaker 602 may be controlled to make a sound image shift prompt tone.

In an embodiment, when an opening of the accelerator pedal gradually increases, a sound image shift direction of the prompt tone may be controlled to point from a position of the speaker 601 to a position of the speaker 602.

In an embodiment, a vehicle may further control a sound image shift speed of the prompt tone based on the opening change of the accelerator pedal.

For example, when an opening change rate of the accelerator pedal is less than a first preset change rate threshold within preset duration (for example, 2 seconds), the speaker 601 and the speaker 602 may be controlled to make a prompt tone with a low sound image shift speed.

For another example, when the opening change rate of the accelerator pedal is greater than or equal to the first preset change rate threshold within the preset duration, the speaker 601 and the speaker 602 may be controlled to make the prompt tone with the high sound image shift speed.

As shown in FIG. 6(b), when an opening change of a brake pedal is determined based on sensing information collected by a brake pedal sensor, the speaker 601 and the speaker 602 may be controlled to make a sound image shift prompt tone.

In an embodiment, when an opening of the brake pedal gradually increases, a sound image shift direction of the prompt tone may be controlled to point from the position of the speaker 602 to the position of the speaker 601.

In an embodiment, the vehicle may further control a sound image shift speed of the prompt tone based on the opening change of the brake pedal.

For example, when an opening change rate of the brake pedal is less than a second preset change rate threshold within preset duration (for example, two seconds), the speaker 601 and the speaker 602 may be controlled to make a prompt tone with a low sound image shift speed.

For another example, when the opening change rate of the brake pedal is greater than or equal to the second preset change rate threshold within the preset duration, the speaker 601 and the speaker 602 may be controlled to make the prompt tone with the high sound image shift speed.

For an implementation process of controlling the speaker 601 and the speaker 602 to make a prompt tone with a low or high sound image shift speed, refer to descriptions in the foregoing embodiments. Details are not described herein again.

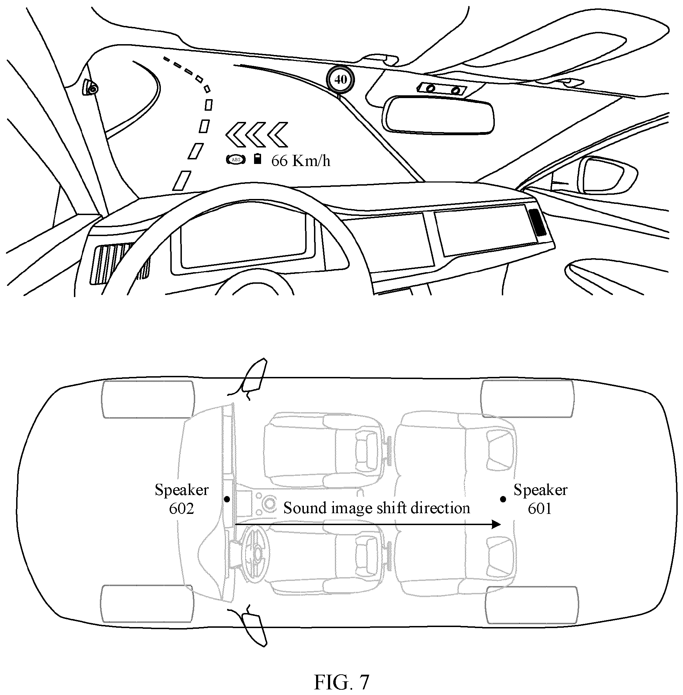

FIG. 7 is a diagram of another application scenario according to an embodiment of this application.

As shown in FIG. 7, in a running process, a vehicle may display information such as navigation information, a current state of charge, and a current vehicle speed by using an HUD. When a speed limit sign is recognized by an image captured by a camera outside a cockpit (for example, a speed limit value is 40 km/h (Kilometer/hour, Km/h)) and a current vehicle speed is greater than the speed limit value displayed on the speed limit sign, a speaker 601 and a speaker 602 may be controlled to make a prompt tone whose sound image shift direction points from a position of the speaker 602 to a position of the speaker 601. The prompt tone indicates that there is a speed limit regulation on a road that the vehicle is about to pass, or the prompt tone indicates a user to control the vehicle to decelerate.

In an embodiment, a sound image shift speed of the prompt tone may be controlled based on a difference between the current vehicle speed and the speed limit value.

For example, when the difference between the current vehicle speed and the speed limit value is less than a first preset difference, the speaker 601 and the speaker 602 may be controlled to make a prompt tone with a low sound image shift speed.

For another example, when the difference between the current vehicle speed and the speed limit value is greater than or equal to the first preset difference, the speaker 601 and the speaker 602 may be controlled to make a prompt tone with a high sound image shift speed.

In this way, the user may learn, based on the sound image shift speed, whether the difference between the current vehicle speed and the speed limit value is excessively large, and the user quickly further controls the vehicle speed. This helps avoid a security risk caused by speeding, and also helps avoid a penalty caused by speeding to the user.

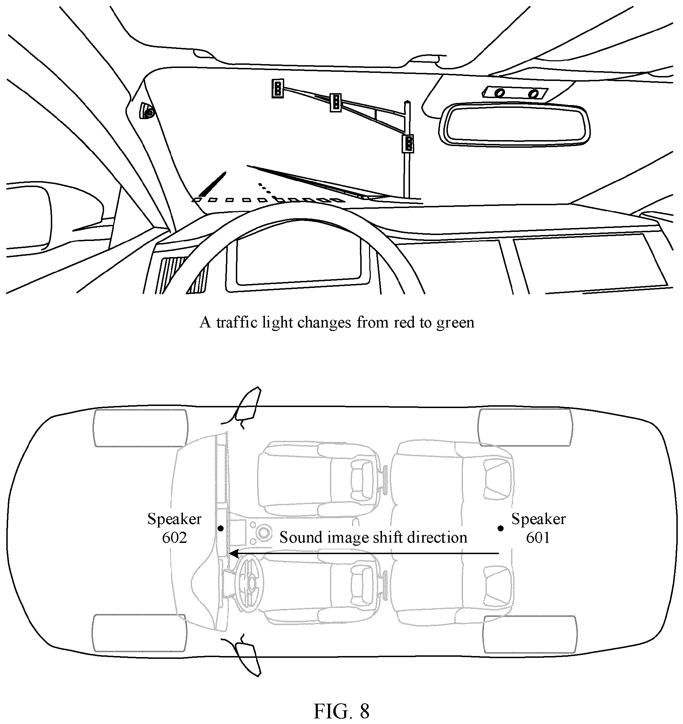

FIG. 8 is a diagram of another application scenario according to an embodiment of this application.

As shown in FIG. 8, a user drives a vehicle and waits for passing at a crossroad. When it is determined, based on an image captured by a camera outside a cockpit, that a traffic indicator changes from red to green, a speaker 601 and a speaker 602 may be controlled to make a sound image shift prompt tone. The prompt tone may indicate that the traffic indicator in an environment in which the vehicle is located changes, or may indicate the user to drive the vehicle to pass through an intersection.

In an embodiment, when it is determined, based on the image captured by the camera outside the cockpit, that the traffic indicator changes from red to green, and it is not detected that the user drives the vehicle forward within preset duration (for example, 10 seconds) after that the traffic indicator is detected to change from red to green, the speaker 601 and the speaker 602 may be controlled to make a sound image shift prompt tone.

In an embodiment, when it is determined, based on the image captured by the camera outside the cockpit, that the traffic indicator changes from red to green, and it is determined, based on an image captured by a camera inside the cockpit, that a line of sight of the user is not in a forward direction of the vehicle, the speaker 601 and the speaker 602 may be controlled to make a sound image shift prompt tone.

In this way, when the traffic indicator indicates that passing is allowed, if attention of the user is not on the traffic indicator, the user may be notified, based on the sound image shift prompt tone, to quickly pass through the intersection. This helps avoid a traffic jam caused by excessively long waiting time, and also helps reduce passing time of the user.

In an embodiment, a sound image shift direction of the prompt tone points from a position of the speaker 601 to a position of the speaker 602.

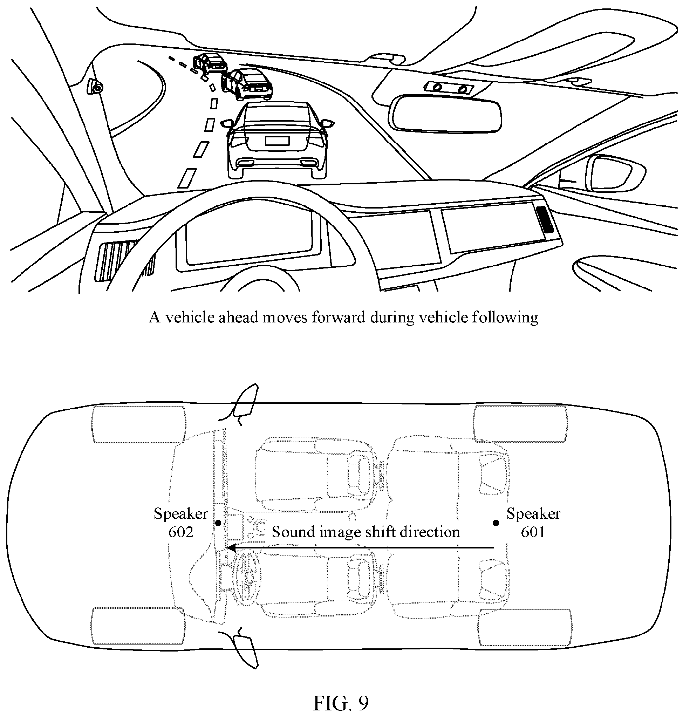

FIG. 9 is a diagram of another application scenario according to an embodiment of this application.

As shown in FIG. 9, when a vehicle driven by a user travels on a congested road section, a vehicle following distance to a vehicle ahead is short. When it is determined, based on sensing information collected by a sensor outside a cockpit, that the vehicle ahead moves forward, a speaker 601 and a speaker 602 may be controlled to make a sound image shift prompt tone. The prompt tone may indicate the vehicle ahead to move forward, or may indicate the user to drive the vehicle forward.

In an embodiment, when it is determined, based on the sensing information collected by the sensor outside the cockpit, that the vehicle ahead moves forward and the distance between the vehicle and the vehicle ahead is greater than or equal to a preset distance (for example, 10 meters), the speaker 601 and the speaker 602 may be controlled to make a sound image shift prompt tone.

In an embodiment, when it is determined, based on the sensing information collected by the sensor outside the cockpit, that the vehicle ahead moves forward, and it is determined, based on an image collected by a camera inside the cockpit, that a line of sight of the user is not in a forward direction of the vehicle, the speaker 601 and the speaker 602 may be controlled to make a sound image shift prompt tone.

In this way, when the vehicle ahead moves, if attention of the user is not in the forward direction, the user may be notified, based on the sound image shift prompt tone, to follow the vehicle ahead. This helps avoid a traffic jam on the congested road section.

In the foregoing, with reference to FIG. 8 and FIG. 9, the scenario in which the prompt tone whose sound image shift direction points from the position of the speaker 601 to the position of the speaker 602 indicate that the traffic indicator changes or the vehicle ahead moves forward is described. Embodiments of this application are not limited thereto. For example, the user can also be notified of another environmental change outside the cockpit based on a sound image shift prompt tone.

For example, the user drives the vehicle away from a parking lot (an exit of the parking lot is a ramp). When it is determined, based on sensing information collected by a sensor outside the cockpit, that a vehicle ahead slips, a sound image shift prompt tone may indicate that the vehicle ahead is slipping. For example, a sound image shift direction of the prompt tone points from the position of the speaker 602 to the position of the speaker 601.

In an embodiment, a sound image shift speed of the prompt tone may be further controlled based on a distance between the vehicle and the vehicle in the slipping state. For example, when the distance between the vehicle and the vehicle in the slipping state is greater than a preset distance (for example, 5 meters), the speaker 601 and the speaker 602 may be controlled to make a prompt tone with a low sound image shift speed. When the distance between the vehicle and the vehicle in the slipping state is less than or equal to the preset distance, the speaker 601 and the speaker 602 may be controlled to make a prompt tone with a high sound image shift speed.

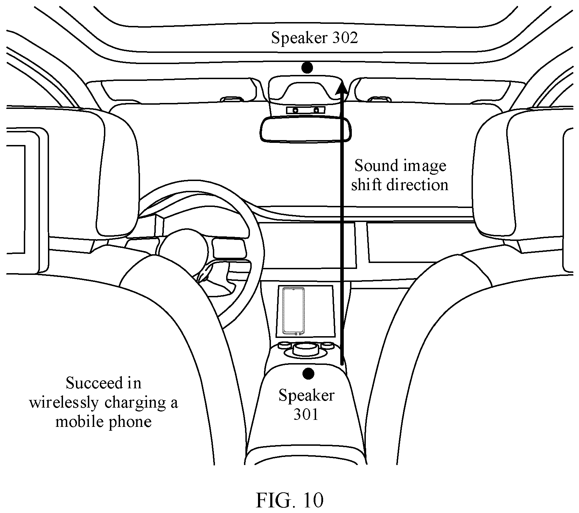

FIG. 10 is a diagram of another application scenario according to an embodiment of this application.

As shown in FIG. 10, when it is detected that the user places a mobile phone in a wireless charging area and charging of the mobile phone succeeds, at least two sound-making apparatuses may be controlled to make a sound image shift prompt tone, where the prompt tone indicates that wireless charging of the mobile phone succeeds.

For example, when it is detected that the user places the mobile phone in the wireless charging area and charging of the mobile phone succeeds, a speaker 301 and a speaker 302 may be controlled to make a sound image shift prompt tone, where a sound image shift direction of the prompt tone points from a position of the speaker 301 to a position of the speaker 302.

In an embodiment, when it is detected that the user places the mobile phone in the wireless charging area and wireless charging of the mobile phone fails, at least two sound-making apparatuses may be controlled to make a sound image shift prompt tone, where the prompt tone indicates that wireless charging of the mobile phone fails.

For example, when it is detected that the user places the mobile phone in the wireless charging area and wireless charging of the mobile phone fails, the speaker 301 and the speaker 302 may be controlled to make a sound image shift prompt tone, where a sound image shift direction of the prompt tone points from the position of the speaker 302 to the position of the speaker 301.

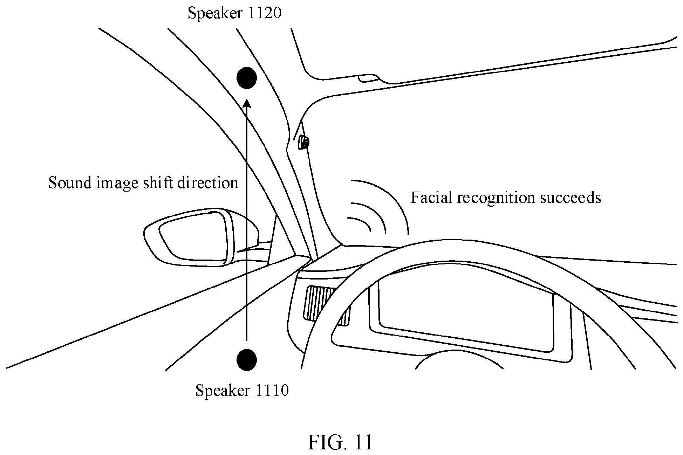

FIG. 11 is a diagram of another application scenario according to an embodiment of this application.

As shown in FIG. 11, when it is detected that there is a user in a driving area, a vehicle may start a camera in a cockpit to perform facial recognition on the user in the driving area. When facial recognition succeeds, a speaker 1110 and a speaker 1120 may be controlled to make a sound image shift prompt tone, where the prompt tone indicates that facial recognition succeeds.

In an embodiment, when facial recognition succeeds, a voice apparatus may be further controlled to make a prompt tone "Facial recognition succeeds".

In an embodiment, when facial recognition succeeds, a sound image shift direction of the prompt tone may be controlled to point from a position of the speaker 1110 to a position of the speaker 1120.

When facial recognition fails, the speaker 1110 and the speaker 1120 may be controlled to make a sound image shift prompt tone, where the prompt tone indicates the user that facial recognition fails.

In an embodiment, when facial recognition fails, the voice apparatus may be further controlled to emit voice information "Facial recognition fails".

In an embodiment, when facial recognition fails, a sound image shift direction of the prompt tone may be controlled to point from the position of the speaker 1120 to the position of the speaker 1110.

The foregoing uses facial recognition on the user as an example for description, and embodiments of this application are not limited thereto. For example, when another biometric feature like a fingerprint or an iris of a user is successfully identified or fails to be identified, at least two sound-making apparatuses in different positions may be controlled to make a sound image shift prompt tone.

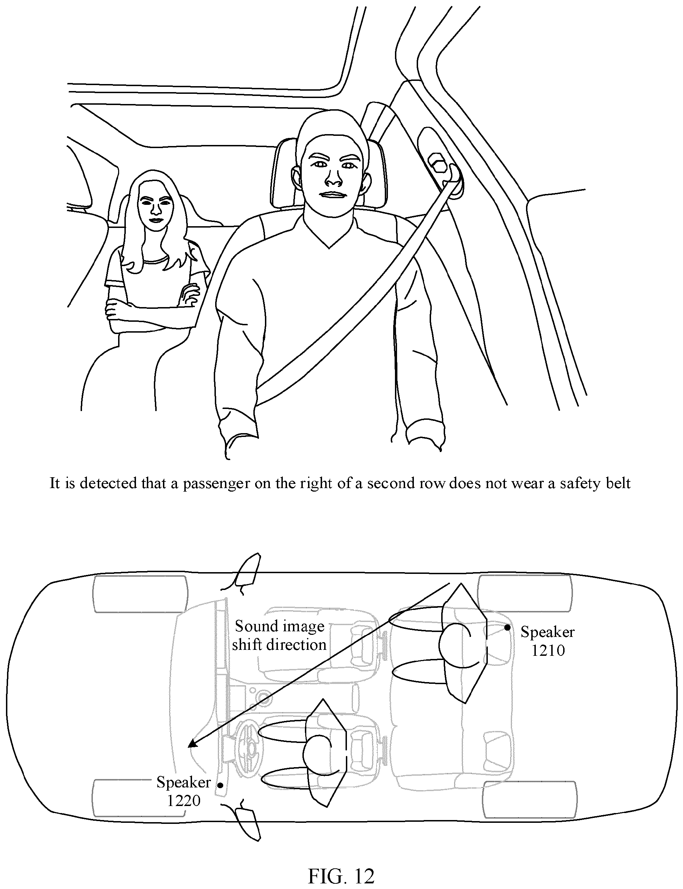

FIG. 12 is a diagram of another application scenario according to an embodiment of this application.

As shown in FIG. 12, when a driver is ready to drive a vehicle and determines, based on sensing information collected by a safety belt status sensor, that a user on the right of a second row does not wear a safety belt, a speaker 1210 and a speaker 1220 may be controlled to make a sound image shift prompt tone, where the prompt tone indicates that a passenger on the right of the second row does not wear the safety belt.

In an embodiment, a sound image shift direction of the prompt tone may point from a position of the speaker 1210 to a position of the speaker 1220, or may point from the position of the speaker 1220 to the position of the speaker 1210.

The position of the speaker 1210 or the position of the speaker 1220 may include one or more speakers. When the position of the speaker 1210 includes a plurality of speakers, the plurality of speakers may form a speaker group. For example, the position of the speaker 1210 includes three speakers, two of the three speakers are located on a door on the right of the second row, and one speaker is located on a C pillar on the right of the second row.

In this way, the driver may be notified, based on a sound image shift prompt tone, of a position of a user who does not wear a safety belt in a cockpit, and the driver further prompts the user to wear the safety belt in time. This helps improve driving experience of the user.

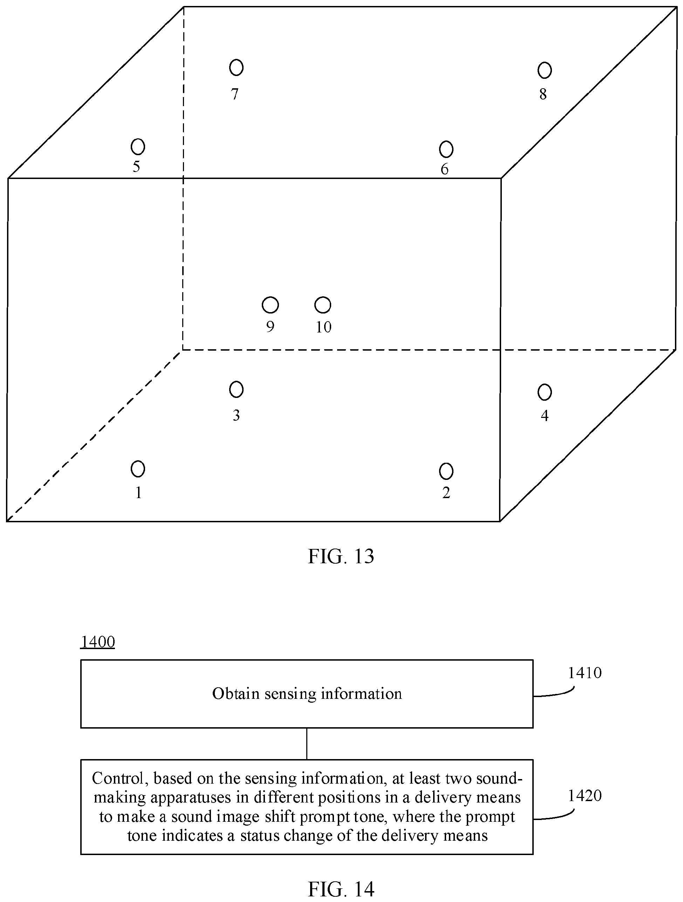

FIG. 13 is a diagram of distribution of speakers in a vehicle according to an embodiment of this application. As shown in FIG. 13, the vehicle may include a speaker 1 to a speaker 10. The speaker 1 and the speaker 5 may be located in a driving area of the vehicle, the speaker 3 and the speaker 7 may be located in a front passenger area of the vehicle, the speaker 2 and the speaker 6 may be located in a left area of a second row of the vehicle, and the speaker 4 and the speaker 8 may be located in a right area of the second row of the vehicle, the speaker 9 and the speaker 10 may be located near a gear of the vehicle.

In an embodiment, the vehicle may determine at least two sound-making apparatuses based on an area in which a user is located.

For example, when it is detected that a user in the driving area enables a function 1, the speaker 1 and the speaker 5 may be controlled to make a sound image shift prompt tone.

For example, when it is detected that a user on the left of the second row enables a function 2, the speaker 2 and the speaker 6 may be controlled to make a sound image shift prompt tone.

In an embodiment, a mapping relationship between a user input and a sound-making apparatus is stored in a vehicle, and the vehicle may determine at least two sound-making apparatuses based on the mapping relationship and sensing information.

For example, Table 1 shows a mapping relationship between a user input, a sound-making apparatus, and a sound image shift direction.

**Table 1**

| User input | Sound-making apparatus | Sound image shift direction |
|---|---|---|
| Switch from a D gear to a P gear, or switch from the D gear to an R gear, or switch from the D gear | Speaker 9 and speaker | Point from a position of the speaker 10 to a |
| to an N gear, or switch from the R gear to the P gear | 10 | position of the speaker 9 |
| Switch from the P gear to the D gear, or switch from the N gear to the D gear, or switch from the R gear to the D gear, or switch from the P gear to the R gear | Speaker 9 and speaker 10 | Point from the position of the speaker 9 to the position of the speaker 10 |
| Enable an ADAS function | Speaker 1 and speaker 5 | Point from a position of the speaker 1 to a position of the speaker 5 |
| Disable the ADAS function | Speaker 1 and speaker 5 | Point from the position of the speaker 5 to the position of the speaker 1 |
| Move a turn signal lever (left steering) | Speaker 5 and speaker 7 | Point from a position of the speaker 7 to the position of the speaker 5 |
| Move the turn signal lever (right steering) | Speaker 5 and speaker 7 | Point from the position of the speaker 5 to the position of the speaker 7 |
| An opening of an accelerator pedal gradually increases | Speaker 5 and speaker 6 | Point from a position of the speaker 6 to the position of the speaker 5 |
| An opening of a brake pedal gradually increases | Speaker 5 and speaker 6 | Point from the position of the speaker 5 to the position of the speaker 6 |
| ... | ... | ... |

For example, when it is determined, based on sensing information collected by a gear sensor, that a user switches a gear from the P gear to the D gear, it may be determined, based on the mapping relationship in Table 1 and the sensing information, to control the speaker 9 and the speaker 10 to make a sound image shift prompt tone. Optionally, a sound image shift direction of the prompt tone may be controlled, based on the mapping relationship and the sensing information, to point from the position of the speaker 9 to the position of the speaker 10.

For example, when it is determined, based on the sensing information collected by an accelerator pedal sensor, that the opening of the accelerator pedal gradually increases, it may be determined, based on the mapping relationship in Table 1 and the sensing information, to control the speaker 5 and the speaker 6 to make a sound image shift prompt tone. Optionally, a sound image shift direction of the prompt tone may be controlled, based on the mapping relationship and the sensing information, to point from the position of the speaker 6 to the position of the speaker 5.

Table 1 is only an example, and embodiments of this application are not limited thereto. For example, when input of the user is moving the turn signal lever (left steering), the speaker 1 and the speaker 3 may be controlled to make a sound image shift prompt tone.

In an embodiment, a mapping relationship between a user input and a sound-making apparatus is stored in a vehicle, and the vehicle determines at least two sound-making apparatuses based on the mapping relationship and sensing information includes: The vehicle determines the at least two sound-making apparatuses based on the mapping relationship, the sensing information, and a position of the user.

For example, Table 2 shows a mapping relationship between an area in which a user is located, a user input, a sound-making apparatus, and a sound image shift direction.

**Table 2**

| Area in which a user is located | User input | Sound-making apparatus | Sound image shift direction |
|---|---|---|---|
| Driving area | Tap a physical button to enable a ventilation function of a driver seat | Speaker 1 and speaker 5 | Point from a position of the speaker 1 to a position of the speaker 5 |
| | Tap a virtual button on a vehicle-mounted display to enable the seat ventilation function of the driver seat | Speaker 1 and speaker 5 | Point from the position of the speaker 1 to the position of the speaker 5 |
| | Send a voice instruction to instruct to enable the seat ventilation function of the driver seat | Speaker 1 and speaker 5 | Point from the position of the speaker 1 to the position of the speaker 5 |
| | ... | ... | ... |
| Front passenger area | Tap a physical button to enable a ventilation function of a front passenger seat | Speaker 3 and speaker 7 | Point from a position of the speaker 3 to a position of the speaker 7 |
| | Tap a virtual button on the vehicle-mounted display to enable the ventilation function of the front passenger seat | Speaker 3 and speaker 7 | Point from the position of the speaker 3 to the position of the speaker 7 |
| | Send a voice instruction to instruct to enable the seat ventilation function of the front passenger seat | Speaker 3 and speaker 7 | Point from the position of the speaker 3 to the position of the speaker 7 |
| | ... | ... | ... |
| ... | ... | ... | ... |

For example, it is determined, based on a voice instruction (for example, "Enable a seat ventilation function") received by using a microphone array, that a user located in the front passenger area sends the voice instruction. Based on the mapping relationship described in Table 2, the voice instruction, and the area in which a user is located, the speaker 3 and the speaker 7 may be controlled to make a sound image shift prompt tone. Optionally, a sound image shift direction of the prompt tone may be controlled, based on the mapping relationship, to point from the position of the speaker 3 to the position of the speaker 7.

FIG. 14 is a schematic flowchart of a control method 1400 according to an embodiment of this application. The method 1400 may be performed by a delivery means (for example, a vehicle), or the method 1400 may be performed by the foregoing computing platform, or the method 1400 may be performed by a system including a computing platform and at least two sound-making apparatuses, or the method 1400 may be performed by a system-on-a-chip (system-on-a-chip, SoC) on the foregoing computing platform, or the method 1400 may be performed by a processor in the computing platform. The method 1400 includes the following steps.

S1410: Obtain sensing information.

For example, the obtaining sensing information includes: The computing platform obtains sensing information collected by a sensor in the delivery means. For example, the sensor may be a gear sensor, a sensor corresponding to a physical button or an entity button, a steering wheel lever sensor, a voice sensor, an accelerator pedal sensor, a brake pedal sensor, or a touch sensor.

For example, the sensing information collected by the gear sensor may indicate a change of a gear.

For example, sensing information collected by the sensor corresponding to the physical button may indicate to enable or disable a corresponding function.

For example, sensing information collected by the steering wheel lever sensor may indicate to steer to a specific direction.

For example, sensing information collected by the voice sensor includes a voice instruction of a user, and the voice instruction indicates the delivery means to perform a corresponding operation.

For example, sensing information collected by the accelerator pedal sensor indicates opening change information of an accelerator pedal.

For example, sensing information collected by the brake pedal sensor indicates opening change information of a brake pedal.

For example, sensing information collected by the touch sensor indicates that a user taps a virtual button (the virtual button may correspond to enabling or disabling of a function), or the sensing information indicates a direction and a speed of a sliding input of the user on a vehicle-mounted display.

S1420: Control, based on the sensing information, at least two sound-making apparatuses in different positions in the delivery means to make a sound image shift prompt tone, where the prompt tone indicates a status change of the delivery means.

Optionally, the method 1400 further includes: controlling a sound image shift direction of the prompt tone based on the sensing information.

Optionally, the sensing information indicates switching from a first gear to a second gear, and the controlling a sound image shift direction of the prompt tone based on the sensing information includes: controlling the sound image shift direction of the prompt tone to be a first direction, where the first direction points from the first gear to the second gear.

For example, as shown in FIG. 2(a), when the sensing information collected by the gear sensor indicates switching from the D gear to the P gear, the speaker 201 and the speaker 202 may be controlled to make a sound image shift prompt tone, where a sound image shift direction of the prompt tone points from the position of the speaker 202 to the position of the speaker 201.

The direction pointing from the position of the speaker 202 to the position of the speaker 201 corresponds to a direction pointing from the D gear to the P gear.

Optionally, the sensing information indicates that a first function is enabled or disabled, and the controlling a sound image shift direction of the prompt tone based on the sensing information includes: controlling the sound image shift direction of the prompt tone to be a second direction, where the second direction is a normal direction of a plane on which the delivery means is located.

For example, as shown in FIG. 3(a), when the sensing information collected by the physical button sensor indicates that the function 1 is enabled, the speaker 301 and the speaker 302 may be controlled to make a sound image shift prompt tone, where a sound image shift direction of the prompt tone may point from the position of the speaker 301 to the position of the speaker 302.

The direction pointing from the position of the speaker 301 to the position of the speaker 302 corresponds to the normal direction of the plane on which the delivery means is located.

Optionally, the sensing information includes a voice instruction, where the voice instruction indicates that a second function is enabled, and the controlling a sound image shift direction of the prompt tone based on the sensing information includes: controlling the sound image shift direction of the prompt tone to be a second direction, where the second direction is a normal direction of a plane on which the delivery means is located.

Optionally, the sensing information indicates steering to a third direction, and the controlling a sound image shift direction of the prompt tone based on the sensing information includes: controlling the sound image shift direction of the prompt tone to be the third direction.

For example, as shown in FIG. 4, when sensing information collected by a steering wheel lever sensor indicates that the user moves the lever downward (left steering), the speaker 401, the speaker 402, and the speaker 403 may be controlled to make a sound image shift prompt tone, where a sound image shift direction of the prompt tone points from the position of the speaker 401 to the position of the speaker 403.

Optionally, the method 1400 further includes: controlling a lighting direction of an atmosphere lamp, where the lighting direction of the atmosphere lamp corresponds to the sound image shift direction, and the delivery means includes the atmosphere lamp.

The scenario shown in FIG. 4 is used as an example. When the sensing information collected by the steering wheel lever sensor indicates that the user moves the lever downward (left steering), the lighting direction of the atmosphere lamp may be further controlled to correspond to the sound image shift direction. For example, a cockpit of the vehicle includes an atmosphere lamp that runs through a driver area and a front passenger area, and the atmosphere lamp may be controlled to be sequentially lighted in a direction from the front passenger area to the driving area.

Optionally, the method 1400 further includes: controlling a sound image shift speed of the prompt tone based on the sensing information.

Optionally, the sensing information indicates an opening change of an accelerator pedal or a brake pedal, and the controlling a sound image shift speed of the prompt tone based on the sensing information includes: controlling the sound image shift speed of the prompt tone based on the opening change of the accelerator pedal or the brake pedal.

For example, as shown in FIG. 6(a), when sensing information collected by the accelerator pedal sensor indicates that the opening of the accelerator pedal gradually increases, a sound image shift speed of the prompt tone may be controlled to gradually increase. Optionally, the sound image shift direction of the prompt tone points from a tail of the vehicle to a head of the vehicle.

For example, as shown in FIG. 6(b), when sensing information collected by the brake pedal sensor indicates that the opening of the brake pedal gradually increases, a sound image shift speed of the prompt tone may be controlled to gradually increase. Optionally, the sound image shift direction of the prompt tone points from the head of the vehicle to the tail of the vehicle.

Optionally, the sensing information indicates a sliding input of the user on a display, and the controlling a sound image shift speed of the prompt tone based on the sensing information includes: controlling the sound image shift speed of the prompt tone based on a speed of the sliding input.

For example, as shown in FIG. 5, when sensing information collected by the touch sensor indicates the sliding input of the user on the vehicle-mounted display, a sound image shift speed of a prompt tone made by the speaker 501 and the speaker 502 may be controlled based on the speed of the sliding input.

Optionally, the method 1400 further includes: determining the at least two sound-making apparatuses based on an area in which the user is located.

For example, when the sensing information is voice information collected by a microphone array, a sound source position may be determined based on the voice information collected by the microphone array. For example, when the sound source position is the driving area, the at least two sound-making apparatuses may be determined from a plurality of sound-making apparatuses in the driving area.

For example, the sensing information is sensing information collected by the touch sensor, and the sensing information indicates the user to tap a virtual button on the display (to enable or disable a function). It may be determined, based on an image captured by a camera in the cockpit, that a user in the front passenger area taps the virtual button, and therefore the at least two sound-making apparatuses may be determined from a plurality of sound-making apparatuses in the front passenger area.

Optionally, the delivery means includes a mapping relationship between a user input and a sound-making apparatus, and the method 1400 further includes: determining the at least two sound-making apparatuses based on the mapping relationship and the sensing information.

For example, the mapping relationship may be shown in Table 1 or Table 2. The at least two sound-making apparatuses may be determined based on the mapping relationship and the sensing information.

The determining the at least two sound-making apparatuses based on the mapping relationship and the sensing information may also be understood as determining the at least two sound-making apparatuses based on the mapping relationship and a user input indicated by the sensing information.

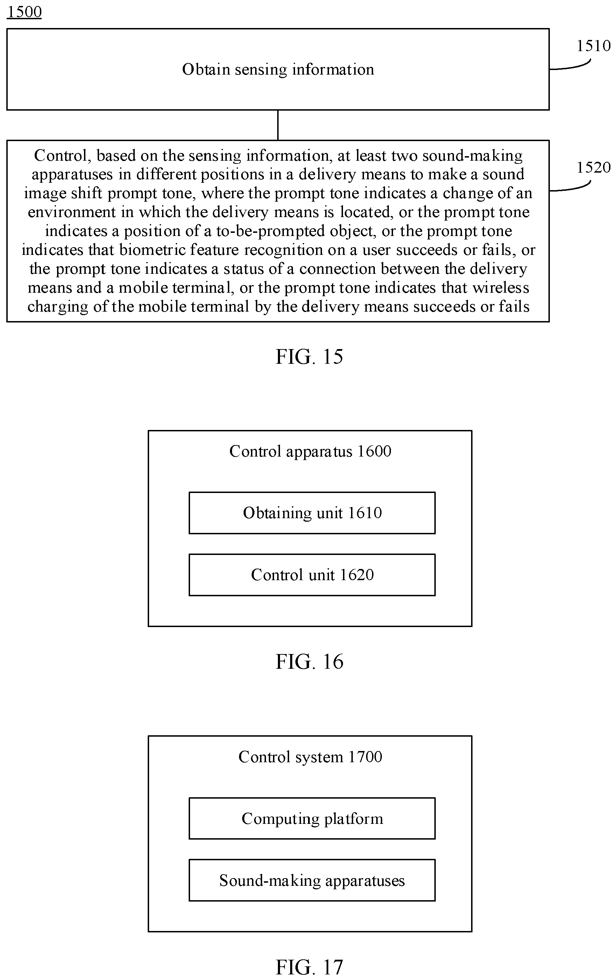

FIG. 15 is a schematic flowchart of a control method 1500 according to an embodiment of this application. The method 1500 may be performed by a delivery means (for example, a vehicle), or the method 1500 may be performed by the foregoing computing platform, or the method 1500 may be performed by a system including a computing platform and a head-up display apparatuses, or the method 1500 may be performed by a SoC on the foregoing computing platform, or the method 1500 may be performed by a processor in the computing platform. The method 1500 includes the following steps.

S1510: Obtain sensing information.

For example, obtaining sensing information includes: A computing platform obtains sensing information collected by a sensor in a delivery means. For example, the sensor may be a sensor outside a cockpit (for example, one or more of a camera, a lidar, a millimeter-wave radar, or a centimeter wave radar), a safety belt status sensor inside the cockpit, a sensor that collects a biometric feature of a user, or the like.

S1520: Control, based on the sensing information, at least two sound-making apparatuses in different positions in a delivery means to make a sound image shift prompt tone, where the prompt tone indicates a change of an environment in which the delivery means is located, or the prompt tone indicates a position of a to-be-prompted object, or the prompt tone indicates that biometric feature recognition on a user succeeds or fails, or the prompt tone indicates a status of a connection between the delivery means and a mobile terminal, or the prompt tone indicates that wireless charging of the mobile terminal by the delivery means succeeds or fails.

Optionally, the sensing information indicates that a traffic indicator in an environment in which the delivery means is located changes, and the prompt tone indicates that the traffic indicator changes.

For example, the delivery means is a vehicle. When a traffic indicator at an intersection at which the vehicle is located indicates that a vehicle in a specific lane can pass through the intersection, the method further includes: controlling a sound image shift direction of the prompt tone to be a forward direction of the vehicle.

As shown in FIG. 8, when the sensing information indicates that the traffic indicator changes from red to green, the speaker 601 and the speaker 602 may be controlled to make a sound image shift prompt tone, where a sound image shift direction of the prompt tone points from the position of the speaker 601 to the position of the speaker 602.

Optionally, for example, the delivery means is a vehicle. The controlling at least two sound-making apparatuses in different positions in a delivery means to make a sound image shift prompt tone includes: when no vehicle is detected to move forward within preset duration after the traffic indicator indicates that a vehicle in a lane can pass through the intersection, controlling the at least two sound-making apparatuses in the different positions of the vehicle to make the sound image shift prompt tone.

In this way, when the traffic indicator indicates that passing is allowed, if attention of the user is not on the traffic indicator, the user may be notified, based on the sound image shift prompt tone, to quickly pass through the intersection. This helps avoid a traffic jam caused by excessively long waiting time, and also helps reduce passing time of the user.

Optionally, for example, the delivery means is a vehicle. The sensing information indicates that the vehicle is currently on a congested road section and another vehicle in front of the vehicle moves forward, and the prompt tone indicates that the another vehicle moves forward.

As shown in FIG. 9, when it is determined, based on sensing information collected by a sensor outside a cockpit, that the vehicle is on the congested road section and the vehicle ahead moves forward, the speaker 601 and the speaker 602 may be controlled to make a sound image shift prompt tone, where the prompt tone may indicate the vehicle ahead to move forward; or the prompt tone may indicate the user to drive the vehicle to move forward.

Optionally, the method 1500 further includes: controlling a sound image shift direction of the prompt tone to be a forward direction of the vehicle. For example, the sound image shift direction of the prompt tone points from the position of the speaker 601 to the position of the speaker 602.

Optionally, for example, the delivery means is a vehicle. The controlling at least two sound-making apparatuses in different positions in a delivery means to make a sound image shift prompt tone includes: when it is detected that the vehicle ahead moves forward and a distance between the vehicle and the vehicle ahead is greater than or equal to a preset distance, controlling the at least two sound-making apparatuses in the different positions in the delivery means to make the sound image shift prompt tone.

In this way, when the vehicle ahead moves forward, if attention of the user is not in the forward direction of the vehicle, the user may be notified, based on the sound image shift prompt tone, to follow the vehicle ahead. This helps avoid a traffic jam on the congested road section.

Optionally, when the sensing information is a sensor (for example, a camera, a fingerprint sensor, or an iris sensor) configured to collect a biometric feature of the user and it is determined, based on the sensing information, that the biometric feature of the user is successfully recognized, the at least two sound-making apparatuses may be controlled to make a sound image shift prompt tone. Optionally, a sound image shift direction of the prompt tone is a normal direction of a plane on which the delivery means is located.

For example, as shown in FIG. 11, when it is determined, based on the image captured by the camera in the cockpit, that facial recognition on the user in the driving area succeeds, the speaker 1110 and the speaker 1120 may be controlled to make the sound image shift prompt tone. Optionally, the sound image shift direction of the prompt tone points from the position of the speaker 1110 to the position of the speaker 1120.

Optionally, when facial recognition on the user in the driving area succeeds, a central display may be controlled to display information related to the user in the driving area. For example, the information related to the user in the driving area includes an application, a card, a wallpaper, an animation, or the like that is related to the user in the driving area.

For example, as shown in FIG. 13, when it is determined, based on an image captured by a camera in a cockpit, that facial recognition on a user in a front passenger area succeeds, the speaker 3 and the speaker 7 may be controlled to make a sound image shift prompt tone. Optionally, a sound image shift direction of the prompt tone points from the position of the speaker 3 to the position of the speaker 7.

Optionally, when facial recognition on the user in the front passenger area succeeds, a front passenger entertainment display may be controlled to display information related to the user in the front passenger area. For example, the information related to the user in the front passenger area includes an application, a card, a wallpaper, an animation, or the like related to the user in the front passenger area.

Optionally, the sensing information indicates that a user in an area of the delivery means does not wear a safety belt, and the method 1500 further includes: controlling a sound image shift direction of the prompt tone to point from an area in which the user is located to an area in which a driver is located, or point from an area in which the driver is located to an area in which the user is located.

As shown in FIG. 12, when the driver is ready to drive the vehicle and determines, based on the sensing information collected by the safety belt status sensor, that the user on the right of the second row does not wear the safety belt, the speaker 1210 and the speaker 1220 may be controlled to make the sound image shift prompt tone, where the prompt tone indicates that the passenger on the right of the second row does not wear the safety belt.

In this way, when a specific user in the delivery means does not wear the safety belt, the driver may be notified, based on the sound image shift prompt tone, of the area in which the user who does not wear the safety belt is located, to help the driver remind, in time, the user to wear the safety belt. This helps improve human-machine interaction experience of the user.

An embodiment of this application further provides an apparatus configured to implement any one of the foregoing methods. For example, the provided apparatus includes a delivery means (for example, a vehicle) configured to implement any one of the foregoing methods, a computing platform in the vehicle, or a SoC on the computing platform, or units (or means) of steps performed by a processor on the computing platform.

FIG. 16 is a block diagram of a control apparatus 1600 according to an embodiment of this application. As shown in FIG. 16, the control apparatus 1600 includes: an obtaining unit 1610, configured to obtain sensing information; and a control unit 1620, configured to control, based on the sensing information, at least two sound-making apparatuses in different positions in a delivery means to make a sound image shift prompt tone, where the prompt tone indicates a status change of the delivery means, or the prompt tone indicates a change of an environment in which the delivery means is located, or the prompt tone indicates a position of a to-be-prompted object, or the prompt tone indicates that biometric feature recognition on a user succeeds or fails, or the prompt tone indicates a status of a connection between the delivery means and a mobile terminal, or the prompt tone indicates that wireless charging of the mobile terminal by the delivery means succeeds or fails.

Optionally, the control unit 1620 is configured to control a sound image shift direction of the prompt tone based on the sensing information.

Optionally, the sensing information indicates switching from a first gear to a second gear, and the control unit 1620 is configured to control the sound image shift direction of the prompt tone to be a first direction, where the first direction points from the first gear to the second gear.

Optionally, the sensing information indicates that a first function is enabled or disabled, and the control unit 1620 is configured to control the sound image shift direction of the prompt tone to be a second direction, where the second direction is a normal direction of a plane on which the delivery means is located.

Optionally, the sensing information indicates steering to a third direction, and the control unit 1620 is configured to control the sound image shift direction of the prompt tone to be the third direction.

Optionally, the control unit 1620 is further configured to control a lighting direction of an atmosphere lamp, where the lighting direction of the atmosphere lamp corresponds to the sound image shift direction, and the delivery means includes the atmosphere lamp.

Optionally, the control unit 1620 is configured to control a sound image shift speed of the prompt tone based on the sensing information.

Optionally, the sensing information indicates an opening change of an accelerator pedal or a brake pedal, and the control unit 1620 is configured to control the sound image shift speed of the prompt tone based on the opening change of the accelerator pedal or the brake pedal.

Optionally, the sensing information indicates a sliding input of the user on a display, and the control unit 1620 is configured to control the sound image shift speed of the prompt tone based on a speed of the sliding input.

Optionally, the apparatus 1600 further includes: a first determining unit, configured to determine the at least two sound-making apparatuses based on an area in which the user is located.

Optionally, the delivery means includes a mapping relationship between a user input and a sound-making apparatus, and the apparatus 1600 further includes: a second determining unit, configured to determine the at least two sound-making apparatuses based on the mapping relationship and the sensing information.

For example, the obtaining unit 1610 may be the computing platform in FIG. 1 or a processing circuit, a processor, or a controller on the computing platform. For example, the obtaining unit 1610 is the processor 151 on the computing platform, and the processor 151 may obtain the sensing information. For example, the processor 151 may obtain gear information sent by a gear sensor, where the gear information indicates switching from a P gear to a D gear.

For another example, the control unit 1620 may be the computing platform in FIG. 1 or a processing circuit, a processor, or a controller on the computing platform. For example, the control unit 1620 is the processor 152 on the computing platform. The processor 152 may control, based on the gear information obtained by the processor 151, at least two sound-making apparatuses to make a sound image shift prompt tone, where the prompt tone indicates a status change of the delivery means.

In an embodiment, the processor 152 may further control a sound image shift direction of the prompt tone. For example, when it is determined that the gear information indicates switching from the P gear to the D gear, the processor 152 may control the sound image shift direction of the prompt tone to point from the position of the speaker 201 to the position of the speaker 202.

In an embodiment, the processor 152 may further control a sound image shift speed of the prompt tone.

Functions implemented by the obtaining unit 1610 and functions implemented by the control unit 1620 may be implemented by different processors, or may be implemented by a same processor. This is not limited in embodiments of this application.

It should be understood that division into units in the apparatus is merely logical function division. During actual implementation, all or some of the units may be integrated into one physical entity or may be physically separated. In addition, the units in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units in the apparatus. The processor is, for example, a general-purpose processor, for example, a CPU or a microprocessor, the memory is a memory inside the apparatus or a memory outside the apparatus. Alternatively, the units in the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and the functions of some or all of the units are implemented by designing a logical relationship between elements in the circuit. For another example, in another implementation, the hardware circuit may be implemented by using a PLD, for example, an FPGA, and the FPGA may include a large quantity of logic gate circuits, and a connection relationship between the logic gate circuits is configured by using a configuration file, to implement the functions of some or all of the foregoing units. All the units of the foregoing apparatus may be implemented in a form of software invoked by a processor, or may be implemented in a form of a hardware circuit, or some of the units are implemented in a form of software invoked by a processor, and the remaining units are implemented in a form of a hardware circuit.

In this embodiment of this application, the processor is a circuit having a signal processing capability. In an implementation, the processor may be a circuit having a capability of instruction reading and running, for example, a CPU, a microprocessor, a GPU, or a DSP. In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In a reconfigurable hardware circuit, a process in which the processor loads a configuration document to implement hardware circuit configuration may be understood as a process in which the processor loads instructions to implement functions of some or all of the foregoing units. In addition, the circuit may be a hardware circuit designed for artificial intelligence, and may be understood as an ASIC, for example, an NPU, a TPU, or a DPU.

It can be learned that the units in the foregoing apparatus may be one or more processors (or processing circuits) for implementing the foregoing method, for example, a CPU, a GPU, an NPU, a TPU, a DPU, a microprocessor, a DSP, an ASIC, an FPGA, or a combination of at least two of these processor forms.

In addition, all or some of the units of the apparatus may be integrated, or may be implemented independently. In an implementation, the units may be integrated together and implemented in a form of a SoC. The SoC may include at least one processor, configured to implement any one of the foregoing method or implement functions of units of the apparatus. Types of the at least one processor may be different, for example, include a CPU and an FPGA, a CPU and an artificial intelligence processor, a CPU and a GPU, and the like.

An embodiment of this application further provides an apparatus. The apparatus includes a processing unit and a storage unit. The storage unit is configured to store instructions. The processing unit executes the instructions stored in the storage unit, so that the apparatus performs the methods or the steps performed in the foregoing embodiments.

Optionally, if the apparatus is located in a delivery means, the processing unit may be the processor 151 to the processor 15n shown in FIG. 1.

FIG. 17 is a block diagram of a control system 1700 according to an embodiment of this application. As shown in FIG. 17, the control system 1700 includes at least two sound-making apparatuses and a computing platform. The computing platform may include the foregoing control apparatus 1600.

Optionally, the control system 1700 further includes one or more sensors.

An embodiment of this application further provides a delivery means. The delivery means may include the control apparatus 1600 or the control system 1700.

Optionally, the delivery means may be a vehicle.

An embodiment of this application further provides a computer program product. The computer program product includes computer program code, and when the computer program code is run on a computer, the computer is enabled to perform the method.

An embodiment of this application further provides a computer-readable medium. The computer-readable medium stores program code, and when the computer program code is run on a computer, the computer is enabled to perform the method.

In an implementation process, steps in the foregoing methods can be implemented by using a hardware integrated logical circuit in the processor, or by using instructions in a form of software. The method of the communication disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be understood that in this embodiment of this application, the memory may include a read-only memory and a random access memory, and provide instructions and data to the processor.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A control method, comprising:
obtaining sensing information; and
controlling, based on the sensing information, at least two sound-making apparatuses in different positions in a delivery means to make a sound image shift prompt tone, wherein the prompt tone indicates a status change of the delivery means.

2. The method according to claim 1, wherein the method further comprises:
controlling a sound image shift direction of the prompt tone based on the sensing information.

3. The method according to claim 2, wherein the sensing information indicates switching from a first gear to a second gear, and the controlling a sound image shift direction of the prompt tone based on the sensing information comprises:
controlling the sound image shift direction of the prompt tone to be a first direction, wherein the first direction points from the first gear to the second gear.

4. The method according to claim 2, wherein the sensing information indicates that a first function is enabled or disabled, and the controlling a sound image shift direction of the prompt tone based on the sensing information comprises:
controlling the sound image shift direction of the prompt tone to be a second direction, wherein the second direction is a normal direction of a plane on which the delivery means is located.

5. The method according to claim 2, wherein the sensing information indicates steering to a third direction, and the controlling a sound image shift direction of the prompt tone based on the sensing information comprises:
controlling the sound image shift direction of the prompt tone to be the third direction.

6. The method according to any one of claims 1 to 5, wherein the method further comprises:
controlling a lighting direction of an atmosphere lamp, wherein the lighting direction of the atmosphere lamp corresponds to the sound image shift direction, and the delivery means comprises the atmosphere lamp.

7. The method according to claim 1 or 2, wherein the method further comprises:
controlling a sound image shift speed of the prompt tone based on the sensing information.

8. The method according to claim 7, wherein the sensing information indicates an opening change of an accelerator pedal or a brake pedal, and the controlling a sound image shift speed of the prompt tone based on the sensing information comprises:
controlling the sound image shift speed of the prompt tone based on the opening change of the accelerator pedal or the brake pedal.

9. The method according to claim 7, wherein the sensing information indicates a sliding input of a user on a display, and the controlling a sound image shift speed of the prompt tone based on the sensing information comprises:
controlling the sound image shift speed of the prompt tone based on a speed of the sliding input.

10. The method according to any one of claims 1 to 9, wherein the method further comprises:
determining the at least two sound-making apparatuses based on an area in which the user is located.

11. The method according to any one of claims 1 to 10, wherein the delivery means comprises a mapping relationship between a user input and a sound-making apparatus, and the method further comprises:
determining the at least two sound-making apparatuses based on the mapping relationship and the sensing information.

12. A control apparatus, comprising:
an obtaining unit, configured to obtain sensing information; and
a control unit, configured to control, based on the sensing information, at least two sound-making apparatuses in different positions in a delivery means to make a sound image shift prompt tone, wherein the prompt tone indicates a status change of the delivery means.

13. The apparatus according to claim 12, wherein the control unit is further configured to:
control a sound image shift direction of the prompt tone based on the sensing information.

14. The apparatus according to claim 13, wherein the sensing information indicates switching from a first gear to a second gear, and the control unit is configured to:
control the sound image shift direction of the prompt tone to be a first direction, wherein the first direction points from the first gear to the second gear.

15. The apparatus according to claim 13, wherein the sensing information indicates that a first function is enabled or disabled, and the control unit is configured to:
control the sound image shift direction of the prompt tone to be a second direction, wherein the second direction is a normal direction of a plane on which the delivery means is located.

16. The apparatus according to claim 13, wherein the sensing information indicates steering to a third direction, and the control unit is configured to:
control the sound image shift direction of the prompt tone to be the third direction.

17. The apparatus according to any one of claims 12 to 16, wherein the control unit is further configured to:
control a lighting direction of an atmosphere lamp, wherein the lighting direction of the atmosphere lamp corresponds to the sound image shift direction, and the delivery means comprises the atmosphere lamp.

18. The apparatus according to claim 12 or 13, wherein the control unit is further configured to:
control a sound image shift speed of the prompt tone based on the sensing information.

19. The apparatus according to claim 18, wherein the sensing information indicates an opening change of an accelerator pedal or a brake pedal, and the control unit is configured to:
control the sound image shift speed of the prompt tone based on the opening change of the accelerator pedal or the brake pedal.

20. The apparatus according to claim 18, wherein the sensing information indicates a sliding input of a user on a display, and the control unit is configured to
control the sound image shift speed of the prompt tone based on a speed of the sliding input.

21. The apparatus according to any one of claims 12 to 20, wherein the apparatus further comprises:
a first determining unit, configured to determine the at least two sound-making apparatuses based on an area in which the user is located.

22. The apparatus according to any one of claims 12 to 21, wherein the delivery means comprises a mapping relationship between a user input and a sound-making apparatus, and the apparatus further comprises:
a second determining unit, configured to determine the at least two sound-making apparatuses based on the mapping relationship and the sensing information.

23. A control apparatus, comprising:
a memory, configured to store a computer program; and
a processor, configured to execute the computer program stored in the memory, so that the apparatus performs the method according to any one of claims 1 to 11.

24. A control system, comprising at least two sound-making apparatuses and a computing platform, wherein the computing platform comprises the apparatus according to any one of claims 12 to 23.

25. A delivery means, comprising the control apparatus according to any one of claims 12 to 23, or comprising the control system according to claim 24.

26. The delivery means according to claim 25, wherein the delivery means is a vehicle.

27. A computer-readable storage medium, wherein the computer-readable storage medium stores a computer program; and when the computer program is executed by a computer, the method according to any one of claims 1 to 11 is performed.

28. A chip, wherein the chip comprises a processor and a data interface, and the processor reads, through the data interface, instructions stored in a memory, to perform the method according to any one of claims 1 to 11.
